# EUROPÄISCHE PATENTSCHRIFT

(11) **EP 3 430 080 B1**
(45) Veröffentlichungstag und Bekanntmachung des Hinweises auf die Patenterteilung: **08.01.2020**
(21) Anmeldenummer: 17710744.8
(22) Anmeldetag: 16.03.2017
(51) Int. Cl.: C08L 25/12, C08L 55/02, C08K 5/098, C08K 5/20, B33Y 70/00

(54) **THERMOPLASTISCHE FORMMASSEN BASIEREND AUF VINYLAROMAT-COPOLYMEREN FÜR DEN 3D DRUCK**
THERMOPLASTIC MOULDING COMPOUND BASED ON VINYLAROMATIC COPOLYMERS FOR 3D PRINTING
MATIÈRES À MOULER THERMOPLASTIQUES À BASE DE COPOLYMÈRES VINYLAROMATIQUES POUR L'IMPRESSION 3D

(30) Priorität: 17.03.2016 EP 16160891
(43) Veröffentlichungstag der Anmeldung: 23.01.2019
(73) Patentinhaber: INEOS Styrolution Group GmbH, 60325 Frankfurt am Main (DE)
(72) Erfinder: BAUMANN, Stéphanie, 97072 Würzburg (DE); EISENTRÄGER, Frank, 50996 Köln (DE); MEINERS, Josef, 47798 Krefeld (DE); NIESSNER, Norbert, 67159 Friedelsheim (DE); SCHMIDT, Hans-Werner, 95444 Bayreuth (DE)
(74) Vertreter: Jacobi, Markus Alexander
(86) Internationale Anmeldenummer: PCT/EP2017/056212
(87) Internationale Veröffentlichungsnummer: WO 2017/158075

(56) Entgegenhaltungen:
- WO-A1-2015/091817
- CN-A- 102 108 164
- CN-A- 102 108 165
- CN-A- 103 804 862

## Beschreibung

Die Erfindung betrifft thermoplastische Formmassen basierend auf Vinylaromat-Copolymeren mit verbessertem Zähigkeits/Viskositäts-Verhältnis für den 3D-Druck, sowie die Verwendung der vorgenannten Formmassen für den 3D-Druck sowie zur Herstellung von Filamenten mit hoher Dimensionsstabilität für den 3D-Druck.

Die Verwendung von amorphen Thermoplasten für den 3D-Druck, insbesondere von Acrylnitril-Butadien-Styrol (ABS), ist bekannt. So wird in der EP-A 1015215 ein Verfahren zur Herstellung eines dreidimensionalen Objekts von vorbestimmter Form aus einem thermisch verfestigbaren Material beschrieben. Für den 3D-Druck wird zunächst das Material verflüssigt und extrudiert, unter Bewegung werden mehrere Schichten des Materials auf einen Träger aufgebracht, und dann wird das geformte Material durch Kühlen unter die Erstarrungstemperatur des Materials verfestigt. Als thermisch verfestigbares Material werden amorphe Thermoplasten, insbesondere Acrylnitril-Butadien-Styrol (ABS), verwendet.

EP-A 1087862 beschreibt ein Rapid-Prototyping-System zur Herstellung eines dreidimensionalen Gegenstands durch Extrusion und Aufbringen von erstarrbarem thermoplastischem Modellier- und Stützmaterial in mehreren Schichten. Das thermoplastische Material wird über eine Spule zugeführt. Als geeignetes modellierbares Material wird ABS genannt. Als brüchiges Stützmaterial, welches nach Fertigstellung des 3D-Modells entfernt wird, wird eine Mischung aus ABS und einem Polystyrol-Copolymer als Füllmaterial mit einem Anteil von bis zu 80% eingesetzt.

EP-A 1497093 beschreibt ein Verfahren zur Herstellung eines Prototyps eines Kunststoffspritzteils aus einem thermoplastischen Material, das verflüssigt in eine Form eingespritzt wird bis es deren Hohlraum ausfüllt und nach Aushärten den Prototyp bildet. Der Prototyp wird dabei via "Fused Deposition Modeling", einer speziellen 3D Druckmethode hergestellt. Das thermoplastische Material wird ausgewählt aus: ABS, Polycarbonat, Polystyrol, Acrylaten, amorphen Polyamiden, Polyestern, PPS, PPE, PEEK, PEAK und Mischungen davon, bevorzugt ist ABS. Um Schrumpfphänomene zu vermeiden werden vorzugsweise amorphe Thermoplasten eingesetzt.

US 2008/0071030 beschreibt ein thermoplastisches Material, welches zur Herstellung von dreidimensionalen Modellen durch mehrschichtige Abscheidung verwendet wird.

Das thermoplastische Material enthält ein Basispolymer, ausgewählt aus der Gruppe bestehend aus: Polyethersulfonen, Polyetherimiden, Polyphenylsulfonen, Polyphenylenen, Polycarbonaten, Polysulfonen, Polystyrolen, Acrylaten, amorphen Polyamiden, Polyestern, Nylon, Polyetheretherketonen und ABS, und 0,5 bis 10 Gew.-% eines Silikon-Trennmittels. Bevorzugt wird als Basispolymer Polyethersulfon eingesetzt und Mischungen davon mit Polystyrol (3 bis 8 Gew.-%). Zur Vermeidung von Schrumpf werden vorzugsweise amorphe Polymere und gegebenenfalls übliche Füllmaterialien eingesetzt.

In US 2009/0295032 werden für den 3D-Druck modifizierte ABS Materialien vorgeschlagen. Die ABS-Materialien werden durch zusätzliche Monomere, Oligo- oder Polymere, insbesondere Acrylate modifiziert. Beispielhaft werden MMA-modifizierte ABS/Poly(Styrol-Acrylnitril)-Blends, insbesondere CYCOLAC ABS MG 94, genannt. Die Proportionen der Komponenten und die Viskosität der Blends werden nicht angegeben. Die vorgenannten Materialien sind jedoch oftmals für den 3D-Druck zu spröde und in Bezug auf die Zähigkeit sowie ihren Geruch verbesserungsbedürftig. Darüber hinaus ist bei den Materialien des Standes der Technik oftmals auch die Viskosität unter den Bedingungen des Schmelzflussindexes bei niedrigen Scherraten zu hoch und ebenfalls verbesserungsbedürftig.

WO 2015/091817 offenbart thermoplastische Formmassen für den 3D-Druck mit einem verbesserten Zähigkeits/Viskositätsverhältnis, die auf schlagzäh modifizierten Vinylaromat-Copolymeren, insbesondere Styrol-Acrylnitril-(SAN)-Copolymeren, basieren. Als Schlagzähmodifikator werden bevorzugt ABS-Pfropfkautschuke eingesetzt. Zur Herstellung von Filamenten mit hoher Dimensionsstabilität für den 3D-Druck können die vorgenannten Formmassen übliche Additive und/oder Hilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. in Mengen von bevorzugt 0,1 bis 30 Gew.-%, besonders bevorzugt 0,1 bis 10 Gew.-% enthalten. Als Gleit- und Entformungsmittel geeignet sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid), die in Mengen von bis zu 1 Gew.-% eingesetzt werden können. Beispiele dazu gibt es nicht.

Viele der vorgenannten Formmassen sind für die Herstellung von Filamenten für den 3D-Druck nicht geeignet oder zumindest verbesserungsbedürftig, da ihre Qualität bzw. Dimensionsstabilität unzureichend ist.

Eine Aufgabe der vorliegenden Erfindung ist es, verbesserte, geruchsarme thermoplastische Materialien (Formmassen) für den 3-D-Druck bereitzustellen, die sich auch zur Herstellung dimensionsstabiler Filamente für den 3D-Druck eignen und deren mechanische Eigenschaften dabei gleichbleibend sind. Die Aufgabe wurde gelöst durch den Zusatz einer spezifischen Gleit- und Entformungsmittelkombination.

Gegenstand der Erfindung ist eine thermoplastische Formmasse für den 3D-Druck enthaltend (bestehend aus) eine(r) Mischung der Komponenten A, B1, B2 und C:
A: 92,9 bis 98,59 Gew.-% mindestens eines schlagzäh modifizierten Polymers A, bestehend aus den Komponenten a und b:
   a: 40 bis 90 Gew.-% mindestens eines Vinylaromat-Copolymers a mit einer mittleren Molmasse Mw von 150.000 bis 360.000 g/mol, ausgewählt aus der Gruppe bestehend aus: Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren, insbesondere Styrol-Acrylnitril-Copolymeren;
   b: 10 bis 60 Gew.-% mindestens eines Pfropfcopolymers b als Schlagzähmodifikator, aus, bezogen auf b:
      b1: 20 bis 90 Gew.-% einer Pfropfgrundlage b1, erhalten durch Polymerisation von:
         b11: 70 bis 100 Gew.-% mindestens eines konjugierten Diens;
         b12: 0 bis 30 Gew.-% mindestens eines weiteren Comonomers ausgewählt aus: Styrol, α-Methylstyrol, Acrylnitril, Methacrylnitril, MMA, MSA und N-Phenylmaleinimid (N-PMI);
         b13: 0 bis 10 Gew.-% eines oder mehrerer polyfunktioneller, vernetzender Monomere;
      b2: 10 bis 80 Gew.-% einer Pfropfauflage b2, erhalten durch Polymerisation von:
         b21: 65 bis 95 Gew.-%, bevorzugt 70 bis 90 Gew.-%, insbesondere 72,5 bis 85 Gew.-%, besonders bevorzugt 75 bis 85 Gew.-% mindestens eines vinylaromatischen Monomeren, vorzugsweise Styrol und/oder α-Methylstyrol, insbesondere Styrol;
         b22: 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril und/oder Methacrylnitril, vorzugsweise Acrylnitril,
         b23: 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI;
         wobei die Summe aus a und b 100 Gew.-% ergibt,
B1: 1,2 bis 3,5 Gew.-% mindestens eines, bevorzugt eines, Amids oder Amidderivats mindestens einer gesättigten höheren Fettsäure mit 14 bis 22, bevorzugt 16 bis 20, C-Atomen, bevorzugt eines Amids oder Amidderivats der Stearin- oder Behensäure, besonders bevorzugt Ethylenbisstearylamid,
B2: 0,2 bis 0,6 Gew.-% mindestens eines, bevorzugt eines, Salzes einer gesättigten höheren Fettsäure mit 14 bis 22, bevorzugt 16 bis 20, C-Atomen, bevorzugt einem Calcium, Magnesium- oder Zinksalz der Stearin- oder Behensäure, besonders bevorzugt Magnesiumstearat,
C: 0,01 bis 3 Gew.-% eines oder mehrerer Hilfsmittel C ausgewählt aus der Gruppe bestehend aus: Stabilisatoren, Oxidationsverzögerern und Mitteln gegen Wärmezersetzung und Zersetzung durch ultraviolettes Licht;
wobei die Summe aus den Komponenten A, B1, B2 und C 100 Gew.-% ergibt.

Im Allgemeinen beträgt die Viskosität (gemessen nach ISO 11443:2014) der erfindungsgemäßen Formmasse bei Scherraten von 1 bis 10 1/s und bei Temperaturen von 250°C nicht mehr als 1x10⁵ Pa*s und die Melt Volume Rate (MVR, gemessen nach ISO 1133-1:2011 bei 220°C und 10 kg Last) mehr als 6 ml/10 min.

Die Summe der in Gew.-% angegebenen Mengen der Komponenten b11, b12 und gegebenenfalls b13, sowie die Summe der in Gew.-% angegebenen Mengen der Komponenten b21 und b22 ergibt immer 100 Gew.-%.

Die Bestimmung der gewichtsmittleren Molmasse Mw erfolgt mittels GPC (Lösungsmittel: Tetrahydrofuran, Polystyrol als Polymerstandard) mit UV-Detektion (DIN EN ISO 16014-5:2012-10).

Die erfindungsgemäß eingesetzte thermoplastische Formmasse kann ferner gegebenenfalls als Komponente D ein oder mehrere übliche, von den Komponenten B1, B2 und C verschiedene, Additive und/oder Hilfsmittel D wie Färbemittel, Farbstoffe und Pigmente, faser- und pulverförmige Füll- und Verstärkungsmittel, Keimbildungsmittel, Verarbeitungshilfsmittel, Weichmacher, Flammschutzmittel usw. enthalten.

Deren Anteil ist in der Regel nicht mehr als 30 Gew.-Teile, bevorzugt nicht mehr als 20 Gew.-Teile, besonders bevorzugt nicht mehr als 10 Gew.-Teile, bezogen auf 100 Gew.-Teile der Formmasse aus den Komponenten A, B1, B2 und C.

Die Komponente D ist kein Gleit- und Entformungshilfsmittel.

Bevorzugt ist eine erfindungsgemäße Formmasse bestehend aus einer Mischung der Komponenten A, B1, B2 und C.

Im Sinne der vorliegenden Erfindung ist unter 3D-Druck die Herstellung von dreidimensionalen Formkörpern mit Hilfe einer für den 3D-Druck geeigneten Vorrichtung (3D-Drucker) zu verstehen. Bei dem erfindungsgemäß verwendeten 3D-Drucker handelt es sich insbesondere um einen für das Fused Deposition Modeling-(FDM)-Verfahren geeigneten 3D-Drucker.

Das FDM-Verfahren ist ein Schmelzschichtungsverfahren bei dem Filamente aus einer für den 3D-Druck geeigneten Formmasse durch Erwärmung in dem 3D-Drucker verflüssigt werden, danach die verflüssigte Formmasse durch Extrudieren mit einer in der Fertigungsebene frei beweglichen Heizdüse schichtweise auf eine bewegliche Bauplattform (Druckbett) oder eine vorhergehende Schicht der Formmasse aufgetragen wird, und dann das geformte Material, gegebenenfalls durch Kühlung, verfestigt wird.

Bevorzugt ist eine erfindungsgemäße Formmasse wie zuvor beschrieben enthaltend (bestehend aus):
93,5 bis 98,2 Gew.-% Komponente A,
1,5 bis 3,0 Gew.-% Komponente B1,
0,25 bis 0,5 Gew.-% Komponente B2, und
0,05 bis 3 Gew.-% Komponente C.

Besonders bevorzugt ist eine erfindungsgemäße Formmasse wie zuvor beschrieben enthaltend (bestehend aus):
95,1 bis 97,95 Gew.-% Komponente A,
1,7 bis 2,5 Gew.-% Komponente B1,
0,3 bis 0,4 Gew.-% Komponente B2, und
0,05 bis 2 Gew.-% Komponente C.

Darüber hinaus bevorzugt enthält die erfindungsgemäße Formmasse im Wesentlichen amorphe Polymere, d.h. mindestens die Hälfte (mindestens 50 Gew.%) der in der Formmasse enthaltenen Polymere sind amorphe Polymere.

### Schlagzäh modifiziertes Polymer A (Komponente A)

Bevorzugt beträgt in dem schlagzäh modifizierten Polymer A der Anteil der Komponente a 50 bis 88 Gew.-% und der Anteil des Schlagzähmodifikators b 50 bis 12 Gew.-%. Besonders bevorzugt beträgt in der Polymermischung A der Anteil des Polymers a 55 bis 85 Gew.-% und der Anteil des Schlagzähmodifikators b 45 bis 15 Gew.-%.

Ganz besonders bevorzugt beträgt in der Polymermischung A der Anteil des Polymers a 65 bis 85 Gew.-% und der Anteil des Schlagzähmodifikators b 35 bis 15 Gew.-%.

### Vinylaromat-Copolymer a

Das Vinylaromat-Copolymer a bildet eine Hartphase mit einer Glasübergangstemperatur TG von > 20°C.

Die gewichtsmittleren Molmassen Mw der Polymere a betragen üblicherweise 150.000 bis 360.000 g/mol, bevorzugt 150.000 bis 300.000 g/mol, besonders bevorzugt 150.000 bis 270.000 g/mol, ganz besonders bevorzugt 150.000 bis 250.000 g/mol, insbesondere 150.000 bis 220.000 g/mol.

Als Vinylaromat-Copolymer a werden erfindungsgemäß Vinylaromat-Copolymere, ausgewählt aus der Gruppe bestehend aus: Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren, Styrol-Acrylnitril-t-Butylmethacrylat-Copolymeren, eingesetzt.

Bei den vorgenannten Vinylaromat-Copolymeren a handelt es sich vorzugsweise um amorphe Polymere.

Bevorzugt verwendet werden als Vinylaromat-Copolymer a Styrol-Acrylnitril-Copolymere (SAN) und α-Methylstyrol-Acrylnitril-Copolymere (AMSAN), insbesondere Styrol-Acrylnitril-Copolymere.

Erfindungsgemäß als Vinylaromat-Copolymer a eingesetzte SAN-Copolymere und α-Methylstyrol-Acrylnitril-Copolymere (AMSAN) sind erhältlich durch Polymerisation von im Allgemeinen 18 bis 35 Gew.-%, bevorzugt 20 bis 35 Gew.-%, besonders bevorzugt 22 bis 35 Gew.-% Acrylnitril (AN), und 82 bis 65 Gew.-%, bevorzugt 80 bis 65 Gew.-%, besonders bevorzugt 78 bis 65 Gew.-% Styrol (S) bzw. α-Methylstyrol (AMS), wobei die Summe aus Styrol bzw. α-Methylstyrol und Acrylnitril 100 Gew.-% ergibt. Besonders bevorzugt sind SAN-Copolymere a vorgenannter Zusammensetzung.

Die eingesetzten SAN und AMSAN-Copolymere weisen im Allgemeinen eine mittlere Molmasse Mw von 150.000 bis 350.000 g/mol, bevorzugt 150.000 bis 300.000 g/mol, besonders bevorzugt 150.000 bis 250.000 g/mol, und ganz besonders bevorzugt 150.000 bis 200.000 g/mol auf.

Erfindungsgemäß als Vinylaromat-Copolymer a eingesetzte SMMA-Copolymere sind erhältlich durch Polymerisation von im Allgemeinen 18 bis 50 Gew.-%, bevorzugt 20 bis 30 Gew.-% Methylmethacrylat (MMA), und 50 bis 82 Gew.-%, bevorzugt 80 bis 70 Gew.-% Styrol, wobei die Summe aus Styrol und MMA 100 Gew.-% ergibt.

Erfindungsgemäß als Polymer a eingesetzte SMSA-Copolymere sind erhältlich durch Polymerisation von im Allgemeinen 10 bis 40 Gew.-%, bevorzugt 20 bis 30 Gew.-% Maleinsäureanhydrid (MSA), und 60 bis 90 Gew.-%, bevorzugt 80 bis 70 Gew.-% Styrol, wobei die Summe aus Styrol und MSA 100 Gew.-% ergibt.

Das Vinylaromat-Copolymer a hat eine Viskositätszahl VZ (ermittelt nach DIN 53 726 bei 25°C, an einer 0,5 Gew.-%igen Lösung des Polymers a in Dimethylformamid) von 50 bis 120, bevorzugt 52 bis 100 und besonders bevorzugt 55 bis 80 ml/g. Die Vinylaromat-Copolymere a werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z. B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

Als SAN-Copolymere geeignet sind handelsübliche SAN-Copolymere wie beispielsweise Luran® von der Firma Ineos Styrolution (Frankfurt). Bevorzugt werden SAN-Copolymere mit einem S/AN-Verhältnis (in Gewichtsprozent) von 81/19 bis 67/33 und einem MVR (gemessen nach ISO 1133 bei 220°C und 10 kg Last) von mindestens 10 ml/10 min wie beispielsweise Luran 368 eingesetzt.

Weiterhin bevorzugt werden SAN-Copolymere mit einem S/AN-Verhältnis (in Gewichtsprozent) von 81/19 bis 65/35 und einem MVR (gemessen nach ISO 1133 bei 220°C und 10 kg Last) von mindestens 8 ml/10 min wie beispielsweise Luran M60, Luran VLL1970, Luran 25100, Luran VLP und Luran VLR eingesetzt; besonders bevorzugt sind unter den vorgenannten SAN-Copolymeren solche mit einem MVR von mindestens 10 ml/10 min.

### Pfropfcopolymer b (Schlagzähmodifikator)

Das erfindungsgemäß eingesetzte Pfropfcopolymer b bildet eine Weichphase mit einer Glasübergangstemperatur TG von < 0°C, vorzugsweise < -20°C, besonders bevorzugt < -40°C.

Die Teilchengröße des erfindungsgemäß eingesetzten Pfropfcopolymers bzw. Schlagzähmodifikators b beträgt im Allgemeinen mindestens 50 nm und höchstens 10 µm, bevorzugt 60 nm bis 5 µm, besonders bevorzugt 80 nm bis 3 µm, ganz besonders bevorzugt 80 nm bis 2 µm.

Dabei bezieht sich die Teilchengröße auf den mittleren Teilchendurchmesser d₅₀.

Die Bestimmung des mittleren Teilchendurchmessers d₅₀ kann durch Ultrazentrifugenmessung ermittelt werden (vgl. W. Scholtan, H. Lange : Kolloid Z. u. Z. Polymere 250, S. 782 bis 796 (1972)).

Gemäß einer besonderen Ausführungsform werden Pfropfcopolymere bzw. Schlagzähmodifikatoren b mit bi-, tri- oder multimodalen Teilchengrößenverteilungen eingesetzt.

Erfindungsgemäß wird mindestens ein Pfropfcopolymer b als Schlagzähmodifikator eingesetzt mit
b1: 20 bis 90 Gew.-%, bevorzugt 40 bis 90 Gew.-%, besonders bevorzugt 45 bis 85 Gew.-%, ganz besonders bevorzugt 50 bis 80 Gew.-%, einer Pfropfgrundlage b1, erhalten durch Polymerisation von:
   b11: 70 bis 100 Gew.-%, bevorzugt 75 bis 100 Gew.-%, besonders bevorzugt 80 bis 100 Gew.-%, mindestens eines konjugierten Diens, insbesondere Butadien,
   b12: 0 bis 30 Gew.-%, bevorzugt 0 bis 25 Gew.-%, besonders bevorzugt 0 bis 20 Gew.-%, mindestens eines weiteren Comonomers ausgewählt aus: Styrol, α-Methylstyrol, Acrylnitril, Methacrylnitril, MMA, MSA und N-Phenylmaleinimid (N-PMI), bevorzugt Styrol und α-Methylstyrol, besonders bevorzugt Styrol;
   b13: 0 bis 10 Gew.-%, bevorzugt 0,01 bis 5, besonders bevorzugt 0,02 bis 2 Gew.-%, eines oder mehrerer polyfunktioneller, vernetzender Monomere,
b2: 10 bis 80 Gew.-%, bevorzugt 10 bis 60, besonders bevorzugt 15 bis 55 Gew.-%, ganz besonders bevorzugt 20 bis 50 Gew.-% einer Pfropfauflage, erhalten durch Polymerisation von:
   b21: 65 bis 95 Gew.-%, bevorzugt 70 bis 90 Gew.-%, insbesondere 72,5 bis 85 Gew.-%, oftmals besonders bevorzugt 75 bis 85 Gew.-% mindestens eines vinylaromatischen Monomeren, vorzugsweise Styrol und/oder α-Methylstyrol, insbesondere Styrol;
   b22: 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril und/oder Methacrylnitril, vorzugsweise Acrylnitril,
   b23: 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI, vorzugsweise MMA.

Als konjugierte Diene b11 kommen Diene mit 4 bis 8 Kohlenstoffatomen wie Butadien, Isopren, Piperylen und Chloropren oder deren Mischungen in Betracht. Bevorzugt verwendet man Butadien oder Isopren oder deren Mischungen, ganz besonders bevorzugt Butadien.

Dien-Kautschuke b1 sind beispielsweise Homopolymere der vorgenannten konjugierten Diene b11, Copolymere solcher Diene b11 untereinander, Copolymere solcher Diene mit Acrylaten b11, insbesondere n-Butylacrylat, und Copolymere solcher Diene mit den Comonomeren b12 ausgewählt aus Styrol, α-Methylstyrol, Acrylnitril, Methacrylnitril Methylmethacrylat (MMA), Maleinsäureanhydrid (MSA) und N-Phenylmaleinimid (N-PMI).

Bevorzugte Dien-Kautschuke sind handelsübliche Butadien-, Butadien-Styrol-, Butadien-Methylmethacrylat-, Butadien-n-Butylacrylat-, Butadien-Acrylnitril- und Acrylnitril-Butadien-Styrol-Kautschuke (ABS); besonders bevorzugt sind ABS-Kautschuke; ganz besonders bevorzugt wird als Dien-Kautschuk b1 ein Butadien-Kautschuk eingesetzt.

Vernetzungsmonomere b13 sind Monomere, die zwei oder mehr zur Copolymerisation befähigte Doppelbindungen enthalten wie Ethylenglykoldiacrylat, Butandioldiacrylat, Hexandioldiacrylat, Ethylenglykoldimethacrylat, Butandioldimethacrylat, Hexandioldimethacrylat, Divinylbenzol, Diallylmaleat, Diallylfumarat, Diallylphthalat, Diallylcyanurat, Tris-allyl-cyanurat, Ester des Tricyclodecenylalkohols wie Tricyclodecenylacrylat, Dihydrodicyclopentadienylacrylat, Diallylphosphat, Allylacrylat, Allylmethacrylat und Dicyclopentadienylacrylat (DCPA). Ester des Tricyclodecenylalkohols, Divinylbenzol, Allyl(meth)acrylat und/oder Tris-allyl-cyanurat sind bevorzugt.

Bevorzugt werden keine Vernetzungsmonomere b13 eingesetzt.

Bei den vorgenannten Pfropfcopolymeren bzw. Schlagzähmodifikatoren b handelt es sich vorzugsweise um Acrylnitril-Butadien-Styrol-(ABS)-Schlagzähmodifikatoren.

Der erfindungsgemäß eingesetzte Schlagzähmodifikator b ist besonders bevorzugt ein ABS-Schlagzähmodifikator b mit
b1: 40 bis 90 Gew.-% einer Pfropfgrundlage b1, erhalten durch Polymerisation von:
   b11: 70 bis 100 Gew.-%, bevorzugt 90 bis 100 Gew.-%, oftmals bevorzugt 90 bis 99,9 Gew.-%, oftmals weiterhin bevorzugt 90 bis 99 Gew.-% Butadien,
   b12: 0 bis 30 Gew.-%, bevorzugt 0 bis 10 Gew.-%, oftmals bevorzugt 0,1 bis 10 Gew.-%, oftmals weiterhin bevorzugt 1 bis 10 Gew.-%, Styrol und
b2: 10 bis 60 Gew.-% einer Pfropfauflage b2, erhalten durch Polymerisation von:
   b21: 65 bis 95 Gew.-%, bevorzugt 70 bis 90 Gew.-%, insbesondere 72,5 bis 85 Gew.-% Styrol, und
   b22: 5 bis 35 Gew.-%, bevorzugt 10 bis 30 Gew.-%, insbesondere 15 bis 27,5 Gew.-% Acrylnitril.

Ganz besonders bevorzugt sind vorgenannte ABS-Schlagzähmodifikatoren,
mit
b1: 40 bis 90 Gew.-% einer Pfropfgrundlage b1, erhalten durch Polymerisation von: b11: 100 Gew.-% Butadien, und
b2: 10 bis 60 Gew.-% einer Pfropfauflage b2, erhalten durch Polymerisation von:
   b21: 70 bis 90 Gew.-%, insbesondere 72,5 bis 85 Gew.-% Styrol und
   b22: 10 bis 30 Gew.-%, insbesondere 15 bis 27,5 Gew.-% Acrylnitril.

Derartige bevorzugte Dien-Kautschuke b1 und ABS-Schlagzähmodifikatoren b werden in der EP 0 993 476 B1 beschrieben. Besonders bevorzugte Dien-Kautschuke b1 und ABS-Schlagzähmodifikatoren b werden in der Druckschrift WO 01/62848 beschrieben.

Bei der Weichkomponente handelt es sich bevorzugt um ein mehrstufig aufgebautes Copolymer (sog. "Kern/Schale-Aufbau", "core/shell morphology"). Beispielsweise kann ein kautschukelastischer Kern (Glastemperatur TG <50°C) von einer "harten" Schale (Polymere mit TG >50°C) oder umgekehrt umhüllt sein. Derartige Kern-Schale-Pfropfcopolymere sind bekannt.

Verfahren zur Herstellung der Schlagzähmodifikatoren b sind dem Fachmann bekannt und in der Literatur beschrieben. Entsprechende Produkte sind zum Teil kommerziell erhältlich. Als besonders vorteilhaft hat sich die Herstellung durch Emulsionspolymerisation erwiesen (EP-B 0 993 476 und WO 01/62848).

Üblicherweise polymerisiert man bei 20 bis 100°C, bevorzugt 30 bis 80°C. In der Regel werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze, insbesondere die Na- und K-Salze, von Alkylsulfonaten oder Fettsäuren mit 10 bis 18 Kohlenstoffatomen.

In der Regel werden die Emulgatoren in Mengen von 0,5 bis 5 Gew.-%, insbesondere von 0,5 bis 3 Gew.-%, bezogen auf die bei der Herstellung der Pfropfgrundlage b1 eingesetzten Monomeren, eingesetzt.

Vorzugsweise verwendet man zur Herstellung der Dispersion soviel Wasser, dass die fertige Dispersion einen Feststoffgehalt von 20 bis 50 Gew.-% hat. Üblicherweise wird bei einem Wasser/Monomeren-Verhältnis von 2 : 1 bis 0,7 : 1 gearbeitet.

Zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

In der Regel werden die Polymerisationsinitiatoren in einer Menge von 0,1 bis 1 Gew.-%, bezogen auf die Pfropfgrundlage-Monomeren b11) und b12), eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt.

Die kontinuierliche Zugabe kann auch entlang eines Gradienten erfolgen, der z. B. auf- oder absteigend, linear oder exponentiell, oder auch stufenweise (Treppenfunktion) sein kann.

Ferner kann man Molekulargewichtsregler wie z. B. Ethylhexylthioglycolat, n- oder t-Dodecylmercaptan oder andere Mercaptane, Terpinole und dimeres alpha - Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Na₂HPO₄/NaH₂PO₄, Natriumhydrogencarbonat oder Puffer auf Basis Citronensäure/Citrat, mitverwenden. Regler und Puffersubstanzen werden in den üblichen Mengen eingesetzt, so dass sich nähere Angaben hierzu erübrigen.

In einer besonderen bevorzugten Ausführungsform fügt man während der Pfropfung der Pfropfgrundlage b1 mit den Monomeren b21) bis b23) ein Reduktionsmittel zu.

Man kann die Pfropfgrundlage b1 in einer besonderen Ausführungsform auch durch Polymerisation der Monomeren b11) bis b13) in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol.

Bei der Saatpolymerisationstechnik wird üblicherweise zunächst ein feinteiliges Polymer, vorzugsweise ein Polybutadien, als Saatlatex hergestellt und dann durch Weiterumsatz mit Butadien enthaltenden Monomeren zu größeren Teilchen weiterpolymerisiert wird (siehe z. B. in Houben Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-ZulaufVerfahrens gearbeitet.

Durch den Einsatz von - insbesondere Polybutadien - Saatlatices mit einem mittleren Teilchendurchmesser d₅₀ von 25 bis 200 nm, vorzugsweise von 30 bis 180 nm und besonders bevorzugt von 60 bis 170 nm, lassen sich Polybutadienlatices b1 mit einem mittleren Teilchendurchmesser d₅₀ von 200 bis 600 nm, vorzugsweise 230 bis 480 nm, besonders bevorzugt von 240 bis 470 nm, ganz besonders bevorzugt von 250 bis 460 nm, erhalten.

Bei Verwendung von Saatlatices mit mittleren Teilchendurchmessern d₅₀ oberhalb 80 nm, vorzugsweise oberhalb 90 nm und besonders bevorzugt oberhalb 100 nm werden auch die Saatlatices selbst vorzugsweise durch Saatpolymerisation hergestellt. Dazu werden vorzugsweise Saatlatices mit mittleren Teilchendurchmessern d₅₀ von 10 bis 60 nm, vorzugsweise 20 bis 50 nm, eingesetzt.

Bevorzugte Pfropfgrundlagen b1 und Pfropfcopolymere bzw. Schlagzähmodifkatoren b können durch die in dem Dokument WO 01/62848A1 beschriebene Saatpolymerisationstechnik erhalten werden.

In einer anderen bevorzugten Ausführungsform kann man die Pfropfgrundlage b1 im sogenannten Zulaufverfahren herstellen. Bei diesem Verfahren wird ein bestimmter Anteil der Monomeren b11) bis b13) vorgelegt und die Polymerisation gestartet, wonach man den Rest der Monomeren b11) bis b13) ("Zulaufanteil") als Zulauf während der Polymerisation zufügt.

Die Zulaufparameter (Gestalt des Gradienten, Menge, Dauer, etc.) hängen von den anderen Polymerisationsbedingungen ab. Sinngemäß gelten auch hier die zur Zugabeweise des Radikalstartes bzw. Emulgators gemachten Ausführungen. Bevorzugt beträgt beim Zulaufverfahren der vorgelegte Anteil der Monomeren b11) bis b13) 5 bis 50 Gew.-%, besonders bevorzugt 8 bis 40 Gew.-%, bezogen auf b1. Bevorzugt lässt man den Zulaufanteil von b11) bis b13) innerhalb 1-18 Stunden, insbesondere 2-16 Stunden, ganz besonders 4 bis 12 Stunden, zulaufen.

Weiterhin eignen sich auch Pfropfpolymere mit mehreren "weichen" und "harten" Schalen, z. B. des Aufbaus b1) -b2) -b1) -b2), oder b2) -b1) -b2), vor allem im Falle größerer Teilchen.

Die genauen Polymerisationsbedingungen, insbesondere Art, Menge und Dosierung des Emulgators und der anderen Polymerisationshilfsstoffe werden bevorzugt so gewählt, dass der erhaltene Latex des Pfropfcopolymeren, d.h. des Schlagzähmodifikators b, eine mittlere Teilchengröße, definiert durch den d₅₀-Wert der Teilchengrößenverteilung, von 80 bis 1000 nm, bevorzugt 85 bis 600 nm und besonders bevorzugt 90 bis 500 nm aufweist.

Man kann die Polymerisationsbedingungen auch so aufeinander abstimmen, dass die Polymerteilchen eine bimodale Teilchengrößenverteilung aufweisen, also eine Größenverteilung mit zwei mehr oder weniger ausgeprägten Maxima. Das erste Maximum ist deutlicher ausgeprägt (vergleichsweise schmaler Peak) als das zweite und liegt in der Regel bei 25 bis 200 nm, bevorzugt 60 bis 170 nm, besonders bevorzugt 70 bis 150 nm. Das zweite Maximum ist vergleichsweise breit und liegt in der Regel bei 150 bis 800 nm, bevorzugt 180 bis 700 nm, besonders bevorzugt 200 bis 600 nm.

Dabei liegt das zweite Maximum (150 bis 800 nm) bei größeren Teilchengrößen als das erste Maximum (25 bis 200 nm).

Oftmals liegt bei einer bimodalen Teilchengrößenverteilung das erste Maximum (b1') der Pfropfgrundlage b1 bei einer mittleren Teilchengröße d₅₀ von 25 bis 200 nm, bevorzugt 30 bis 180 nm, besonders bevorzugt 60 bis 170 nm, und das zweite Maximum (b1") der Pfropfgrundlage b1 bei einer mittleren Teilchengröße d₅₀ von 230 bis 480 nm, ganz besonders bevorzugt 240 bis 470 nm, ganz besonders bevorzugt 250 bis 460 nm.

Gemäß einer weiteren Ausführungsform ist die Teilchengrößenverteilung der Pfropfgrundlage b1 trimodal: das erste Maximum (b1') der Pfropfgrundlage b1 liegt bei einer mittleren Teilchengröße d₅₀ von 25 bis 200 nm, bevorzugt 30 bis 180 nm, besonders bevorzugt 60 bis 170 nm, und das zweite Maximum (b1") der Pfropfgrundlage b1 bei einem mittleren Teilchendurchmesser d₅₀ von 230 bis 330 nm, vorzugsweise von 240 bis 320 nm und besonders bevorzugt von 250 bis 310 nm, und das dritte Maximum (b1"') besitzt einen mittleren Teilchendurchmesser d₅₀ von 340 bis 480 nm, vorzugsweise von 350 bis 470 nm und besonders bevorzugt von 360 bis 460 nm.

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren b11) bis b13), welche den Kern aufbauen, bis zu einem Umsatz von üblicherweise mindestens 90, bevorzugt grösser 95%, bezogen auf die eingesetzten Monomeren. Dieser Umsatz ist in der Regel nach 4 bis 20 Stunden erreicht. Der erhaltene Kautschuklatex hat eine mittlere Teilchengröße d₅₀ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymers. Vorzugsweise werden Dispersionen von Copolymeren von (C1-C4-Alkyl)estern der Acrylsäure, vorzugsweise von Ethylacrylat, mit 0,1 bis 10 Gew.-% polare Polymere bildenden Monomeren, z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymer aus 96% Ethylacrylat und 4% Methacrylamid. Die Agglomerierdispersion kann gegebenenfalls auch mehrere der genannten Acrylesterpolymerisate enthalten.

Die Konzentration der Acrylesterpolymerisate in der zur Agglomeration verwendeten Dispersion soll im Allgemeinen zwischen 3 und 40 Gew.-% liegen. Bei der Agglomeration werden 0,2 bis 20, vorzugsweise 1 bis 5, Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im Allgemeinen dauert sie etwa 1 bis 30 Minuten bei einer Temperatur zwischen 20 und 90°C, vorzugsweise zwischen 30 und 75°C.

Außer mittels einer Acrylesterpolymer-Dispersion kann der Kautschuklatex auch durch andere Agglomeriermittel wie z. B. Essigsäureanhydrid, agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so dass eine bimodale Verteilung entsteht. Dabei liegen nach der Agglomeration im Allgemeinen mehr als 50%, vorzugsweise zwischen 75 und 95% der Teilchen (Zahlen-Verteilung) im nicht agglomerierten Zustand vor. Der erhaltene teilagglomerierte Kautschuklatex ist verhältnismäßig stabil, so dass er ohne weiteres gelagert und transportiert werden kann, ohne dass Koagulation eintritt.

Um eine bimodale Teilchengrößenverteilung des Pfropfcopolymers b zu erzielen, ist es auch möglich, zwei verschiedene Pfropfpolymerisate b' und b", die sich in ihrer mittleren Teilchengröße unterscheiden, getrennt voneinander in üblicher Weise herzustellen und die Pfropfcopolymere b' und b" im gewünschten Mengenverhältnis zusammenzugeben. Diese Variante ist erfindungsgemäß bevorzugt.

Um eine trimodale Teilchengrößenverteilung des Pfropfcopolymers b zu erzielen, ist es auch möglich, zwei verschiedene Pfropfgrundlagen b1' und b1", die sich in ihrer mittleren Teilchengröße unterscheiden, getrennt voneinander in üblicher Weise herzustellen, die Pfropfgrundlagen vor der Pfropfung (oder gegebenenfalls auch danach) im gewünschten Verhältnis zusammenzubringen und dann die Propfauflage aufzupropfen und danach zu den so erhaltenen Pfropfcopolymeren b' und b" ein drittes, getrennt hergestelltes, Pfropfcopolymer b"', das sich von b' und b" in seiner mittleren Teilchengröße unterscheidet, im gewünschten Mengenverhältnis hinzuzufügen.

Das vorgenannte Pfropfcopolymer b ist oftmals eine Mischung verschiedener ABS-Pfropfpolymere b' und b" oder verschiedener ABS-Pfropfpolymere b', b" und b"'.

Im Falle einer bimodalen Teilchengrößenverteilung ist der Schlagzähmodifikator b bevorzugt eine Mischung von ABS-Pfropfcopolymeren b' und b", wobei die Pfropfgrundlage b1' des ABS-Pfropfcopolymers b' üblicherweise eine mittlere Teilchengröße d₅₀ von 25 bis 200 nm, bevorzugt 30 bis 180 nm, besonders bevorzugt 60 bis 170 nm aufweist und die Pfropfgrundlage b1" des ABS-Pfropfcopolymers b" eine mittlere Teilchengröße d₅₀ von 230 bis 480 nm, ganz besonders bevorzugt 240 bis 470 nm, ganz besonders bevorzugt 250 bis 460 nm besitzt.

Im Falle einer trimodalen Teilchengrößenverteilung ist der Schlagzähmodifikator b bevorzugt eine Mischung von ABS-Pfropfcopolymeren b', b" und b"', wobei die Pfropfgrundlage b1' des ABS-Pfropfcopolymers b' eine mittlere Teilchendurchmesser d₅₀ von 25 bis 200 nm, bevorzugt 30 bis 180 nm, besonders bevorzugt 60 bis 170 nm aufweist, die Pfropfgrundlage b1" des ABS-Pfropfcopolymers b" einen mittleren Teilchendurchmesser d₅₀ von 230 bis 330 nm, vorzugsweise von 240 bis 320 nm und besonders bevorzugt von 250 bis 310 nm aufweist und die Pfropfgrundlage b1"' des ABS-Pfropfcopolymers b"' einen mittleren Teilchendurchmesser d₅₀ von 340 bis 480 nm, vorzugsweise von 350 bis 470 nm und besonders bevorzugt von 360 bis 460 nm besitzt.

Die Pfropfgrundlagen b1', b1" und b1"' sind vorzugsweise Butadien-Homopolymere und die jeweilige Pfropfauflage b2 ist vorzugsweise ein SAN-Copolymer.

Die Propfcopolymere b', b", b"' werden in einem Gewichtsverhältnis Propfcopolymer b' : Summe der Propfcopolymere b" und b"' von im Allgemeinen 75:25 bis 50:50, vorzugsweise 70:30 bis 55:45, besonders bevorzugt 65:35 bis 57:43, insbesondere 60:40 eingesetzt.

Besonders bevorzugt ist eine Mischung vorgenannter Pfropfcopolymere b' und b" oder b', b" und b"', deren jeweilige Pfropfgrundlage b1' und b1" bzw. b1', b1" und b1"' durch Saatpolymerisation hergestellt wurde.

Die Pfropfgrundlage b1" weist im Allgemeinen einen mittleren Teilchendurchmesser d₅₀ von 230 bis 330 nm, vorzugsweise von 240 bis 320 nm und besonders bevorzugt von 250 bis 310 nm auf.

Der Gelgehalt von b1" beträgt im Allgemeinen 30 bis 80 Gew.-%, vorzugsweise 40 bis 75 Gew.-% und besonders bevorzugt 45 bis 70 Gew.-%.

Die Pfropfgrundlage b1"' besitzt im Allgemeinen einen mittleren Teilchendurchmesser d₅₀ von 340 bis 480 nm, vorzugsweise von 350 bis 470 nm und besonders bevorzugt von 360 bis 460 nm.

Der Gelgehalt von b1"' beträgt im Allgemeinen 50 bis 95 Gew.-%, vorzugsweise 55 bis 90 Gew.-% und besonders bevorzugt 60 bis 85 Gew.-%.

Ganz besonders bevorzugt erfolgt die Saatpolymerisation der Pfropfgrundlage der Pfropfgrundlagen b1" und b1"' unter Verwendung von mindestens einem Polybutadiensaatlatex mit einem mittleren Teilchendurchmesser d₅₀ von 25 bis 200 nm, vorzugsweise von 30 bis 180 nm und besonders bevorzugt von 60 bis 170 nm.

Die Pfropfgrundlage b1' besitzt im Allgemeinen einen mittlere Teilchendurchmesser d₅₀ von 25 bis 200 nm, bevorzugt 30 bis 180 nm, besonders bevorzugt 60 bis 170 nm.

Ganz besonders bevorzugt erfolgt die Saatpolymerisation der Pfropfgrundlage b1' unter Verwendung von mindestens einem Polybutadiensaatlatex mit einem mittleren Teilchendurchmesser d₅₀ von 10 bis 60 nm, vorzugsweise 20 bis 50 nm.

Der Gelgehalt der Pfropfgrundlage b1' beträgt 30 bis 98 Gew.-%, vorzugsweise 40 bis 95 Gew.-% und besonders bevorzugt 50 bis 92 Gew.-%.

Die Bestimmung des mittleren Teilchendurchmessers d₅₀ kann durch Ultrazentrifugenmessung ermittelt werden (vgl. W. Scholtan, H. Lange: Kolloid Z. u. Z. Polymere 250, S. 782 bis 796 (1972)); die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte können in prinzipiell bekannter Weise durch Anwendung geeigneter Reaktionsbedingungen eingestellt werden (z. B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z. B. niedrige Reaktionstemperatur und/oder Abbruch der Polymerisationsreaktion vor Eintreten einer zu starken Vernetzung sowie gegebenenfalls Zusatz von Molekulargewichtsreglern zur Erzielung eines niedrigen Gelgehaltes).

Mischungen der vorgenannten erfindungsgemäß eingesetzten Propfcopolymere b', b" und b"' und die Herstellung derer Pfropfgrundlagen durch Saatpolymerisation werden in der WO 01/62848 beschrieben.

Üblicherweise wird die Polymerisation der Pfropfgrundlage b1 durch Wahl der Reaktionsbedingungen so geführt, dass eine Pfropfgrundlage mit einem bestimmten Vernetzungszustand resultiert. Als hierfür wesentliche Parameter sind beispielhaft anzuführen die Reaktionstemperatur und -dauer, das Verhältnis von Monomeren, Regler, Radikalstarter und beispielsweise beim Zulaufverfahren, die Zulaufgeschwindigkeit und die Menge und der Zugabezeitpunkt von Regler und Initiator.

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI der erfindungsgemäßen Formmassen im Bereich QI = 10 bis 60, bevorzugt bei 15 bis 55 und besonders bevorzugt bei 20 bis 50.

Eine andere Methode zur Charakterisierung des Vernetzungszustandes ist die Messung von NMR-Relaxationszeiten der beweglichen Protonen, die sog. T2-Zeiten. Je stärker vernetzt ein bestimmtes Netzwerk ist, desto niedriger liegen seine T2-Zeiten. Übliche T2-Zeiten für die erfindungsgemäßen Pfropfgrundlagen b1 sind T2-Zeiten im Bereich 2,0 bis 4,5 ms, bevorzugt 2,5 bis 4,0 ms und besonders bevorzugt 2,5 bis 3,8 ms, gemessen an verfilmten Proben bei 80°C.

Ein weiteres Maß für die Charakterisierung der Pfropfgrundlage und deren Vernetzungszustand ist der Gelgehalt, d. h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt.

Übliche Gelgehalte der erfindungsgemäßen Pfropfgrundlagen b1 liegen im Bereich 50 bis 90%, bevorzugt 55 bis 85% und besonders bevorzugt 60 bis 80%.

Bei den erfindungsgemäß bevorzugt eingesetzten Mischungen von Pfropfgrundlagen b1', b1" und b1"' mit trimodaler Teilchengrößenverteilung liegen die einzelnen GelGehalte in den weiter oben beschriebenen Bereichen.

Die Bestimmung des Quellungsindex geschieht beispielsweise nach folgendem Verfahren: ca. 0,2 g des Feststoffes einer durch Verdampfen des Wassers verfilmten Pfropfgrundlagendispersion werden in einer genügend großen Menge (z. B. 50 g) Toluol angequollen. Nach z. B. 24 h wird das Toluol abgesaugt und die Probe ausgewogen. Nach Trocknen der Probe im Vakuum wird erneut ausgewogen.

Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trockenauswaage nach dem Quellschritt zur Einwaage vor dem Quellschritt (x 100%).

Die Bestimmung der T2-Zeit geschieht durch Messen der NMR-Relaxation einer entwässerten und verfilmten Probe der Pfropfgrundlagendispersion. Hierzu wird beispielsweise die Probe nach Ablüften über Nacht bei z.B. 60°C 3 h im Vakuum getrocknet und dann mit einem geeigneten Messgerät, z. B. minispec-Gerät der Fa. Brucker, bei 80°C vermessen. Vergleichbar sind nur Proben, die nach der gleichen Methode vermessen wurden, da die Relaxation deutlich temperaturabhängig ist.

Die Herstellung der Pfropfauflage b2 kann unter den gleichen Bedingungen wie die Herstellung der Pfropfgrundlage b1 erfolgen, wobei man die Auflage b2 in einem oder mehreren Verfahrensschritten herstellen kann.

Beispielsweise kann man bei einer zweistufigen Pfropfung zunächst Styrol bzw. alpha-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfcopolymeren bzw. der Schlagzähmodifikatoren b, sind in den DE 12 60 135 und DE 31 49 358 beschrieben.

Es ist vorteilhaft, die Pfropfpolymerisation auf die Pfropfgrundlage b1 wiederum in wässriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage b1 verwendeten Emulgatoren bzw. Initiatoren nicht identisch sein. So kann z. B. zweckmäßig sein, als Initiator für die Herstellung der Pfropfgrundlage b1 ein Persulfat zu verwenden, zur Polymerisation der Pfropfhülle b2 jedoch ein Redoxinitiator-System einzusetzen. Im Übrigen gilt für die Wahl von Emulgator, Initiator und Polymerisationshilfsstoffen das bei der Herstellung der Pfropfgrundlage b1 gesagte. Das aufzupfropfende Monomeren-Gemisch kann dem Reaktionsgemisch auf einmal, absatzweise in mehreren Stufen oder vorzugsweise kontinuierlich während der Polymerisation zugegeben werden.

Soweit bei der Pfropfung der Pfropfgrundlage b1 nicht gepfropfte Polymere aus den Monomeren b21) bis b23) entstehen, werden die Mengen, die in der Regel unter 10 Gew.-% von b2 liegen, der Masse der Komponente b zugeordnet.

### Komponente B1

Als Komponente B1, einem Gleit- und Entformungsmittel, wird mindestens ein, bevorzugt ein, Amid mindestens einer, bevorzugt einer gesättigten höheren Fettsäure mit 14 bis 22, insbesondere 16 bis 20, C-Atomen, oder ein Amidderivat mindestens einer, bevorzugt einer gesättigten höheren Fettsäure mit 14 bis 22, insbesondere 16 bis 20, C-Atomen, eingesetzt.

Bevorzugt ist Komponente B1 ein Amid einer gesättigten höheren Fettsäure mit 16 bis 20 C-Atomen oder bevorzugt ein Amidderivat einer gesättigten höheren Fettsäure mit 16 bis 20 C-Atomen. Besonders bevorzugt ist Komponente B1 ein Amid oder Amidderivat der Stearin- oder Behensäure, insbesondere ein Amidderivat der Stearinsäure, ganz besonders bevorzugt Ethylenbisstearylamid.

Der Anteil der Komponente B1, bezogen auf die erfindungsgemäße Formmasse aus den Komponenten A, B1, B2 und C, beträgt bevorzugt 1,5 bis 3,0 Gew.-%, besonders bevorzugt 1,7 bis 2,5 Gew.-%.

### Komponente B2

Als Komponente B2, einem Gleit- und Entformungsmittel, wird mindestens ein, bevorzugt ein Salz mindestens einer, bevorzugt einer, gesättigten höheren Fettsäure mit 14 bis 22, insbesondere 16 bis 20, C-Atomen, eingesetzt. Bevorzugt ist Komponente B2 ein Calcium, Magnesium- oder Zinksalz einer gesättigten höheren Fettsäure mit 16 bis 20 C-Atomen. Besonders bevorzugt ist Komponente B2 ein Calcium, Magnesium- oder Zinksalz der Stearin- oder Behensäure, ganz besonders bevorzugt Magnesiumstearat.

Der Anteil der Komponente B2, bezogen auf die erfindungsgemäße Formmasse aus den Komponenten A, B1, B2 und C, beträgt bevorzugt 0,25 bis 0,5 Gew.-%, besonders bevorzugt 0,3 bis 0,4 Gew.-%.

### Hilfsmittel C

Die erfindungsgemäße Formmasse enthält als Komponente C ein oder mehrere Hilfsmittel C ausgewählt aus der Gruppe bestehend aus: Stabilisatoren, Oxidationsverzögerern und Mitteln gegen Wärmezersetzung und Zersetzung durch ultraviolettes Licht.

Oftmals werden 2 oder mehr verschiedene der vorgenannten Hilfsmittel C eingesetzt.

Die Gesamtmenge des Hilfsmittels C beträgt im Allgemeinen 0,01 bis 3 Gew.-%, insbesondere 0,05 bis 2 Gew.-%, besonders bevorzugt 0,1 bis 2 Gew.-%, bezogen auf die erfindungsgemäße Formmasse aus den Komponenten A, B1, B2 und C.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, genannt.

Als UV-Stabilisatoren, die im Allgemeinen in Mengen bis zu 2 Gew.-% verwendet werden, seien verschiedene substituierte Resorcine, Salicylate, Benzotriazole und Benzophenone genannt.

### Additive D

Die erfindungsgemäß eingesetzte Formmasse kann ferner gegebenenfalls ein oder mehrere übliche, von den Komponenten B1, B2 und C verschiedene, Additive D wie Färbemittel, Farbstoffe und Pigmente, faser- und pulverförmige Füll- und Verstärkungsmittel, Keimbildungsmittel, Verarbeitungshilfsmittel, Weichmacher, Flammschutzmittel usw. enthalten, deren Anteil in der Regel nicht mehr als 30 Gew.-Teile, bevorzugt nicht mehr als 20 Gew.-Teile, besonders bevorzugt nicht mehr als 10 Gew.-Teile beträgt, bezogen auf 100 Gew.-Teile der Formmasse aus den Komponenten A, B1, B2 und C.

Falls ein oder mehrere Additive D in der erfindungsgemäßen Formmasse vorhanden sind, beträgt deren Mindestanteil üblicherweise 0,01 Gew.-Teile, bevorzugt 0,05 Gew.-Teile, besonders bevorzugt 0,1 Gew.-Teile.

Als Farbstoffe können organische Farbstoffe wie Nigrosin, Pigmente wie Titandioxid, Phthalocyanine, Ultramarinblau und Ruß zugesetzt werden, sowie faser- und pulverförmige Füllstoffe und Verstärkungsmittel. Beispiele für letztere sind Kohlenstoffasern, Glasfasern, amorphe Kieselsäure, Calciumsilikat (Wollastonit), Aluminiumsilikat, Magnesiumcarbonat, Kaolin, Kreide, gepulverter Quarz, Glimmer und Feldspat. Der Anteil derartiger Füll- und Farbstoffe beträgt im Allgemeinen bis zu 30 Gew.-Teile, bevorzugt bis zu 20 Gew.-Teile, besonders bevorzugt bis zu 10 Gew.-Teile.

Als Keimbildungsmittel können z.B. Talkum, Calciumfluorid, Natriumphenylphosphinat, Aluminiumoxid, Siliciumdioxid und Nylon 22 eingesetzt werden.

Zur besseren Verarbeitung können in Mengen bis zu 0,1 Gew.-Teile Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Verarbeitungshilfsmittel kann beispielsweise Mineralöl, vorzugsweise medizinisches Weißöl, in Mengen bis zu 5 Gew.-Teile, vorzugsweise bis zu 2 Gew.-Teile eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

### Herstellung der Formmasse

Die Herstellung der erfindungsgemäßen Formmassen aus den Komponenten A, B1, B2, C und gegebenenfalls Additiven und/oder Hilfsmitteln D ist auch Gegenstand der Erfindung. Sie kann nach allen bekannten Methoden erfolgen.

Zur Herstellung der thermoplastischen Formmassen ist im Einzelnen das Folgende auszuführen:
Die Pfropfcopolymere bzw. Schlagzähmodifikatoren b mit uni-, bi- oder trimodaler Teilchengrößenverteilung werden nach dem Verfahren der Emulsionspolymerisation hergestellt, wie es bereits oben beschrieben wurde. Die gewünschte Teilchengrößenverteilung kann, wie bereits beschrieben, durch geeignete, dem Fachmann geläufige, Maßnahmen eingestellt werden.

Die erhaltene Dispersion der Pfropfcopolymere b kann entweder direkt mit den Komponenten a, B1, B2, C und gegebenenfalls D vermischt werden, oder sie kann zuvor aufgearbeitet werden. Letzteres Vorgehen ist bevorzugt.

Die Aufarbeitung der Dispersion der Pfropfcopolymere b erfolgt in an sich bekannter Weise. Üblicherweise wird zunächst das Pfropfcopolymer b aus der Dispersion ausgefällt, beispielsweise durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation). Die wässrige Phase kann in üblicher Weise, etwa durch Sieben, Filtrieren, Dekantieren oder Zentrifugieren, abgetrennt werden. Man erhält durch diese vorherige Abtrennung des Dispersionswassers wasserfeuchte Pfropfcopolymere b mit einem Restwassergehalt von bis zu 60 Gew.-%, bezogen auf b, wobei das Restwasser z. B. sowohl am Pfropfcopolymer b äußerlich anhaften als auch darin eingeschlossen sein kann.

Das Pfropfcopolymer b kann danach erforderlichenfalls in bekannter Weise weiter getrocknet werden, z. B. durch Warmluft oder mittels eines Stromtrockners. Ebenso ist es möglich, die Dispersion durch Sprühtrocknung aufzuarbeiten.

Die Pfropfcopolymere b werden mit dem Polymer a, den Komponenten B1, B2, C und gegebenenfalls D, in einer Mischvorrichtung vermischt, wobei eine im Wesentlichen schmelzflüssige Polymermischung entsteht.

"Im wesentlichen schmelzflüssig" bedeutet, dass die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Metallflocken, oder auch ungeschmolzene Pigmente, Farbstoffe etc. "Schmelzflüssig" bedeutet, dass die Polymermischung zumindest zähflüssig ist, sie also zumindest in dem Maß erweicht ist, dass sie plastische Eigenschaften hat.

Als Mischvorrichtungen werden solche verwendet, die dem Fachmann bekannt sind. Man kann die Komponenten a, b, B1, B2, C und - sofern enthalten D beispielsweise durch gemeinsames Extrudieren, Kneten oder Verwalzen vermischen, wobei die vorgenannten Komponenten a und b notwendigenfalls zuvor aus der bei der Polymerisation erhaltenen Lösung oder aus der wässrigen Dispersion isoliert worden sind.

Im Falle des Einmischens einer oder mehrerer Komponenten in Form einer wässrigen Dispersion bzw. einer wässrigen oder nichtwässrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des Verfahrens sind beispielsweise diskontinuierlich arbeitende, beheizte Innenkneter mit oder ohne Stempel, kontinuierlich arbeitende Kneter wie z. B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte mechanische Energie bereits ein Schmelzen der Mischung, so dass die Mischvorrichtung nicht beheizt werden muss. Ansonsten wird die Mischvorrichtung in der Regel beheizt. Die Temperatur richtet sich nach den chemischen und physikalischen Eigenschaften der Komponenten a, b, B1, B2, C und - sofern enthalten - D, und ist so zu wählen, dass eine im Wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, dass die Mischvorrichtung sogar gekühlt werden muss. Üblicherweise betreibt man die Mischvorrichtung bei 160 bis 400, bevorzugt 180 bis 300°C.

In einer bevorzugten Ausführungsform erfolgt das Vermischen des Pfropfcopolymers b mit dem Polymer a, den Komponenten B1, B2, C und gegebenenfalls D, in einem Extruder, wobei die Dispersion des Pfropfcopolymers b ohne vorherige Abtrennung des Dispersionswassers direkt in den Extruder eindosiert wird. Das Wasser wird üblicherweise entlang des Extruders über geeignete Entgasungsvorrichtungen entfernt.

Als Entgasungsvorrichtungen können beispielsweise Entgasungsöffnungen, die mit Rückhalteschnecken versehen sind (welche das Austreten der Polymermischung verhindern), eingesetzt werden.

In einer anderen, ebenfalls bevorzugten Ausführungsform erfolgt das Vermischen der vorgenannten Komponenten, in einem Extruder, wobei das Pfropfcopolymer b zuvor vom Dispersionswasser abgetrennt wird. Man erhält durch diese vorherige Abtrennung des Dispersionswassers wasserfeuchte Pfropfcopolymere b mit einem Restwassergehalt von bis zu 60 Gew.-%, bezogen auf b. Das vorhandene Restwasser kann dann, wie zuvor beschrieben, über Entgasungseinrichtungen des Extruders als Dampf entfernt werden. Besonders bevorzugt wird jedoch das Restwasser im Extruder nicht allein als Dampf entfernt, sondern es wird ein Teil des Restwassers mechanisch im Extruder entfernt und verlässt den Extruder in flüssiger Phase. Bei diesem sogenannten Abquetschverfahren (EP-B 0 993 476, S. 13-16) werden dem gleichen Extruder das Polymer a, die Komponenten B1, B2, C und - sofern vorhanden - D zugeführt, so dass als Produkt des Verfahrens die fertige Formmasse extrudiert wird.

Bevorzugt ist eine erfindungsgemäße Formmasse wie zuvor beschrieben, enthaltend (bzw. bestehend aus):
A: 93,5 bis 98,2 Gew.-% mindestens eines schlagzäh modifizierten Polymers A, bestehend aus den Komponenten a und b:
   a:50 bis 88 Gew.-%, bevorzugt 55 bis 85 Gew.-% mindestens eines Styrol-Acrylnitril-Copolymeren mit einer mittleren Molmasse Mw von 150.000 bis 360.000 g/mol, erhalten durch Polymerisation von 18 bis 35 Gew.-%, bevorzugt 20 bis 35 Gew.-%, besonders bevorzugt 22 bis 35 Gew.-% Acrylnitril, und 82 bis 65 Gew.-%, bevorzugt 80 bis 65 Gew.-%, besonders bevorzugt 78 bis 65 Gew.-% Styrol;
   b:50 bis 12 Gew.-%, bevorzugt 45 bis 15 Gew.-% mindestens eines Pfropfcopolymers b als Schlagzähmodifikator, aus, bezogen auf b:
      b1: 20 bis 90 Gew.-%, bevorzugt 40 bis 90 Gew.-% einer Pfropfgrundlage b1, erhalten durch Polymerisation von:
         b11: 70 bis 100 Gew.-%, bevorzugt 90 bis 100 Gew.-% Butadien,
         b12: 0 bis 30 Gew.-%, bevorzugt 0 bis 10 Gew.-% Styrol; und
      b2: 10 bis 80 Gew.-%, bevorzugt 10 bis 60 Gew.-%, einer Pfropfauflage b2, erhalten durch Polymerisation von:
         b21: 65 bis 95 Gew.-%, bevorzugt 70 bis 90 Gew.-%, insbesondere 72,5 bis 85 Gew.-%, besonders bevorzugt 75 bis 85 Gew.-% Styrol;
         b22: 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril;
         wobei die Summe aus a und b 100 Gew.-% ergibt,
B1: 1,5 bis 3,0 Gew.-% eines Amids oder Amidderivats der Stearin- oder Behensäure, besonders bevorzugt Ethylenbisstearylamid,
B2: 0,25 bis 0,5 Gew.-% eines Calcium, Magnesium- oder Zinksalz der Stearin- oder Behensäure, bevorzugt Magnesiumstearat; und
C: 0,05 bis 3 Gew.-% eines oder mehrerer Hilfsmittel C.

Besonders bevorzugt ist eine erfindungsgemäße Formmasse enthaltend (bestehend aus):
A: 95,1 bis 97,95 Gew.-% eines schlagzäh modifizierten Polymers A, bestehend aus den Komponenten a und b:
   a:55 bis 85 Gew.-%, bevorzugt 65 bis 85 Gew.-% mindestens eines Styrol-Acrylnitril-Copolymeren mit einer mittleren Molmasse Mw von 150.000 bis 360.000 g/mol, erhalten durch Polymerisation von 18 bis 35 Gew.-%, bevorzugt 20 bis 35 Gew.-%, besonders bevorzugt 22 bis 35 Gew.-% Acrylnitril, und 82 bis 65 Gew.-%, bevorzugt 80 bis 65 Gew.-%, besonders bevorzugt 78 bis 65 Gew.-% Styrol,
   b:45 bis 15 Gew.-%, bevorzugt 35 bis 15 Gew.-% mindestens eines Pfropfcopolymers b als Schlagzähmodifikator, aus, bezogen auf b:
      b1: 20 bis 90 Gew.-%, bevorzugt 40 bis 90 Gew.-%, einer Pfropfgrundlage b1, erhalten durch Polymerisation von:
         b11: 70 bis 100 Gew.-% Butadien;
         b12: 0 bis 30 Gew.-% Styrol;
      b2: 10 bis 80 Gew.-%, bevorzugt 10 bis 60 Gew.-%, einer Pfropfauflage b2, erhalten durch Polymerisation von:
         b21: 65 bis 95 Gew.-%, bevorzugt 70 bis 90 Gew.-%, insbesondere 72,5 bis 85 Gew.-%, besonders bevorzugt 75 bis 85 Gew.-% Styrol;
         b22: 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril;
B1: 1,7 bis 2,5 Gew.-% eines Amids oder Amidderivats der Stearin- oder Behensäure, besonders bevorzugt Ethylenbisstearylamid,
B2: 0,3 bis 0,4 Gew.-% eines Calcium, Magnesium- oder Zinksalzes der Stearin- oder Behensäure, bevorzugt Magnesiumstearat; und
C: 0,05 bis 2 Gew.-% eines oder mehrerer Hilfsmittel C.

Weiterhin bevorzugt sind vorgenannte erfindungsgemäße Formmassen, deren Pfropfgrundlage b1 durch Polymerisation von 100 Gew.-% Butadien (b11) erhalten wurde.

Die Viskosität der erfindungsgemäßen Formmasse ist bei Scherraten von 1 bis 10 1/s und bei Temperaturen von 250 °C im Allgemeinen nicht höher als 1x10⁵ Pa*s, vorzugsweise nicht höher als 1x10⁴ Pa*s, besonders bevorzugt nicht höher als 1x10³ Pa*s.

Die Melt Volume Rate (MVR, gemessen nach ISO 1133-1:2011 bei 220°C und 10 kg Last) beträgt im Allgemeinen mehr als 6 ml/10 min, bevorzugt mehr als 8 ml/10 min, besonders bevorzugt mehr als 10 ml/10 min, ganz besonders bevorzugt mehr als 12 ml/min.

Die erfindungsgemäße Formmasse zeichnet sich auch dadurch aus, dass deren Restmonomergehalt nicht mehr als 2000 ppm, vorzugsweise nicht mehr als 1000 ppm, besonders bevorzugt nicht mehr als 500 ppm beträgt. Unter Restmonomergehalt ist der Anteil an nicht umgesetzten (nicht einpolymerisierten) Monomeren in der Formmasse zu verstehen.

Ferner zeichnet sich die erfindungsgemäße Formmasse dadurch aus, dass deren Lösungsmittelgehalt wie z.B. von Ethylbenzol, Toluol usw. nicht mehr als 1000 ppm, vorzugsweise nicht mehr als 500 ppm, besonders bevorzugt nicht mehr als 200 ppm beträgt.

Der geringe Restmonomer- und Lösungsmittelgehalt kann dadurch erzielt werden, dass übliche Verfahren zur Reduzierung von Restmonomeren und Lösungsmitteln aus Polymerschmelzen, wie z.B. im Kunststoffhandbuch, Hrg. R. Vieweg und G. Daumiller, Bd. 4 "Polystyrol", Carl-Hanser-Verlag München (1996), S. 121 bis 139 beschrieben, angewandt werden. In diesen Verfahren werden typische Entgasungsapparate wie beispielsweise Teilverdampfer, Flachverdampfer, Strangentgaser, Dünnschichtverdampfer oder Entgasungsextruder eingesetzt. Durch den geringen Restmonomergehalt sowie Lösungsmittelgehalt ist die erfindungsgemäße Formmasse geruchsarm und eignet sich daher hervorragend für 3D-Drucker im Heimanwendungsbereich (home-use) sowie für industriell eingesetzte 3D-Drucker.

Darüber hinaus enthält die Formmasse nicht mehr als 500 ppm, bevorzugt nicht mehr als 400 ppm, besonders bevorzugt nicht mehr als 300 ppm von Übergangsmetallen wie beispielsweise Fe, Mn und Zn. Formmassen mit einem solchen niedrigen Gehalt an Übergangsmetallen lassen sich beispielsweise dadurch erhalten, dass, falls zum Starten der Polymerisation der in der Formmasse enthaltenen Polymere Redoxinitiatoren eingesetzt werden, diese Redoxinitiatoren nur in geringen Mengen in Kombination mit Peroxiden verwendet werden. Weiterhin sollten deshalb in der Formmasse nur geringe Mengen an übergangsmetallhaltigen Mineralien (z.B. Pigmente) enthalten sein.

Die erfindungsgemäßen Formmassen weisen ein optimiertes Zähigkeit/Viskositätsverhältnis auf und eignen sich von daher hervorragend für den 3D-Druck und werden erfindungsgemäß zur Herstellung von dreidimensionalen Objekten von vorbestimmter Form mit Hilfe einer Vorrichtung für den 3D-Druck verwendet. Ein weiterer Gegenstand der Erfindung ist daher die Verwendung der erfindungsgemäßen Formmassen für den 3D-Druck.

Dabei können übliche für den 3D-Druck geeignete Vorrichtungen, insbesondere 3D-Drucker für die Heimanwendung (home-use), eingesetzt werden. Ebenfalls geeignet sind 3D-Drucker für den industriellen Bereich.

Ein Vorteil für den Heimanwendungsbereich sowie auch den industriellen Anwendungsbereich ist, dass die Formmasse geruchsarm ist, da sie nur einen geringen Restmonomergehalt sowie Lösungsmittelgehalt aufweist.

Der Aufbau des dreidimensionalen Objektes erfolgt im Allgemeinen computergesteuert aus der erfindungsgemäßen verflüssigten Formmasse nach vorgegebenen Maßen und Formen (CAD).

Zur Herstellung des dreidimensionalen Objektes können übliche Verfahren des 3D-Drucks gemäß dem Stand der Technik wie z.B. in EP 1015215 B1 und US 2009/0295032 A1 beschrieben verwendet werden.

Üblicherweise wird zunächst die erfindungsgemäße Formmasse verflüssigt und extrudiert, mehrere Schichten der Formmasse werden auf eine Basis wie einen Träger oder eine vorhergehende Schicht der Formmasse aufgebracht, und dann wird das geformte Material durch Kühlen unter die Erstarrungstemperatur der Formmasse verfestigt.

Bevorzugt ist die Verwendung der erfindungsgemäßen Formmasse in 3D-Druckern, die für das Fused Deposition Modeling-(FDM)-Verfahren geeignet sind.

Weiterer Gegenstand der Erfindung ist ein Verfahren zur Herstellung von 3-dimensionalen Formkörpern aus der erfindungsgemäßen Formmasse, wobei in einem 3D-Drucker mit einer in der Fertigungsebene frei beweglichen Heizdüse ein zugeführtes Filament aus der erfindungsgemäßen Formmasse verflüssigt wird, die verflüssigte Formmasse extrudiert und schichtweise mit Hilfe des Fused Deposition Modeling Verfahrens aufgetragen und, gegebenenfalls durch Kühlung, verfestigt wird. Die Düsentemperatur beträgt im Allgemeinen 200 bis 270°C, bevorzugt 230 bis 250°C, insbesondere 240°C.

Ein weiterer Gegenstand der Erfindung ist die Verwendung von den erfindungsgemäßen Formmassen zur Herstellung von Filamenten mit hoher Dimensionsstabilität für den 3D-Druck. Die durch übliche Verfahren (z.B. Extrusion) aus den erfindungsgemäßen Formmassen erhaltenen Filamente weisen eine hohe Dimensionsstabilität auf.

Unter einer hohen Dimensionsstabilität eines Filaments für den 3D-Druck ist im Sinne der vorliegenden Erfindung zu verstehen, dass der erhaltene mittlere Durchmesser des Filaments von dem Soll-Durchmesser des Filaments maximal +/- 0,045 mm, bevorzugt maximal +/- 0,035 mm, besonders bevorzugt maximal +/- 0,025 mm abweicht und die Ovalität des Filaments < 0,03 mm, bevorzugt < 0,02 mm, ganz bevorzugt ≤ 0,015 mm ist. Als Soll-Durchmesser des Filaments wird vorzugsweise ein Durchmesser von 1,50 bis 3,20 mm ausgewählt, besonders bevorzugt beträgt er 1,70 bis 1,80 oder 2,80 bis 3,00, ganz besonders bevorzugt 1,75 bis 1,80 mm oder 2,85 bis 3,00.

Die Erfindung wird durch die vorliegenden Beispiele und Ansprüche konkretisiert.

### Beispiele

Als Polymer a wurden folgende Copolymere eingesetzt:
a1: SAN-Copolymer mit 73 Gew.-% Styrol und 27 Gew.-% Acrylnitril (= S/AN 73/27), MVR (220°C/10'): 55 ccm/10 min
a5: SAN-Copolymer (S/AN 65/35), MVR (220°C/10'): 61 ccm/10 min
Der MVR-Wert wurde nach ISO 1133 bei 220°C und 10 kg Last bestimmt.

Als Schlagzähmodifikator b mit einer trimodalen Teilchengrößenverteilung wurde eine Mischung von ABS-Pfropfcopolymeren b', b" und b"' mit verschiedenen Teilchendurchmessern eingesetzt, wobei der Anteil der ABS Pfropfcopolymere b" und b"' (Gewichtsverhältnis b" : b"' = 50 : 50) in der Mischung zusammen 60 Gew.-% und der Anteil ABS-Pfropfcopolymer b' 40 Gew.-% betrug.

### Herstellung ABS-Pfropfcopolymere b" und b"'

29 Gew.-Teile (gerechnet als Feststoff) eines unter Verwendung eines Polybutadiensaatlatex mit einem mittleren Teilchendurchmesser d₅₀ von 111 nm durch radikalische Saatpolymerisation hergestellten anionisch emulgierten Polybutadienlatex (b1") mit einem mittleren Teilchendurchmesser d₅₀ von 305 nm und einem Gelgehalt von 55 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex (b1"') mit einem mittleren Teilchendurchmesser d₅₀ von 404 nm und einem Gelgehalt von 81 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex (b" und b"') nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### Herstellung ABS-Pfropfcopolymer b'

50 Gew.-Teile (gerechnet als Feststoff) eines unter Verwendung eines Polybutadiensaatlatex mit einem mittleren Teilchendurchmesser d₅₀ von 48 nm durch radikalische Saatpolymerisation hergestellten anionisch emulgierten Polybutadienlatex mit einem mittleren Teilchendurchmesser d₅₀ von 137 nm und einem Gelgehalt von 88 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 50 Gew.-Teile eines Gemisches aus 73 Gew.-% Styrol. 27 Gew.-% Acrylnitril und 0, 15 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

**Gleit- und Entformungsmittel B**

| | |
|---|---|
| B1: | Distearylethylendiamid-Wachs (EBS), Acrawax® C der Fa. Lonza |
| B2: | Magnesium-Stearat (Mg) |

**Additive C**

| | |
|---|---|
| C1: | Irganox® 1076 von Ciba Inc., Oxidationsverzögerer und Wärmestabilisator |
| C2: | Irganox® PS802 der Fa. BASF SE, Wärmestabilisator |

### Herstellung der Formmassen

Die oben beschriebenen Polymerkomponenten a und b werden unter Zusatz der Komponenten C1 und C2 sowie gegebenenfalls B1 und/oder B2 in den in Tabelle 1 angegebenen Anteilen in einem Doppelschneckenextruder bei 200 bis 250°C vermischt und zu einer Formmasse verarbeitet. Die Formmassen 1 bis 4 sind erfindungsgemäß; die Formmassen V1 bis V6 sind Vergleichsbeispiele.

**Tabelle 1: Zusammensetzung Formmasse**

| Formmasse (FM) | 1 | 2 | 3 | 4 | V1 | V2 | V3 | V4 | V5 | V6 |
|---|---|---|---|---|---|---|---|---|---|---|
| b (Gew.-%, bezogen auf A) | 15 | 15 | 30 | 30 | 15 | 15 | 30 | 30 | 30 | 30 |
| a1 (Gew.-%, bezogen auf A) | 85 | | 70 | | 85 | | 70 | | 70 | 70 |
| a5 (Gew.-%, bezogen auf A) | | 85 | | 70 | | 85 | | 70 | | |
| A (Gew.-%, bezogen auf gesamte FM | 97,2 | 97,2 | 97,2 | 97,2 | 99,5 | 99,5 | 99,5 | 99,5 | 97,5 | 99,2 |
| B1 (Gew.-%, bezogen auf gesamte FM) | 2 | 2 | 2 | 2 | | | | | 2 | |
| B2 (Gew.-%, bezogen auf gesamte FM) | 0,3 | 0,3 | 0,3 | 0,3 | | | | | | 0,3 |
| C1 (Gew.-%, bezogen auf gesamte FM) | 0,2 | 0,2 | 0,2 | 0,2 | 0,2 | 0,2 | 0,2 | 0,2 | 0,2 | 0,2 |
| C2 (Gew.-%, bezogen auf gesamte FM) | 0,3 | 0,3 | 0,3 | 0,3 | 0,3 | 0,3 | 0,3 | 0,3 | 0,3 | 0,3 |

Aus der erhaltenen Formmasse werden mit Hilfe eines Einschneckenextruders mit Zahnradpumpe mit einer um 90° nach unten umgelenkten Düse mit einem Düsendurchmesser von 2 mm in einem auf 85°C beheizten Wasserbad bei einem Temperaturprofil von 210 bis 225°C Filamente mit einem Soll-Durchmesser von 1,78 mm hergestellt. Die Qualität der Filamente wurde im Hinblick auf die Dimensionskonstanz mittels eines Dreiachs-Lasermesskopfes zur inline-Messung des Durchmessers und der Ovalität untersucht (Tabelle 2).

**Tabelle 2: Filamentqualität**

| Formmasse | Polymer a (MVR/AN Gew.-%) | Mittlerer Durchmesser DM (mm) | Maximale Durchmesserabweichung DM (mm) | Ovalität (mm) |
|---|---|---|---|---|
| 1 | a1 (55/27) | 1,782 | 0,022 | 0,024 |
| 2 | a5 (61/35) | 1,783 | 0,027 | 0,017 |
| 3 | a1 (55/27) | 1,781 | 0,021 | 0,013 |
| 4 | a5 (61/35) | 1,780 | 0,020 | 0,011 |
| V1 | a1 (55/27) | 1,780 | 0,038 | 0,027 |
| V2 | a5 (61/35) | 1,780 | 0,036 | 0,026 |
| V3 | a1 (55/27) | 1,780 | 0,028 | 0,027 |
| V4 | a5 (61/35) | 1,780 | 0,034 | 0,020 |
| V5 | a1 (55/27) | 1,783 | 0,038 | 0,021 |
| V6 | a1 (55/27) | 1,781 | 0,032 | 0,016 |

### Ergebnisse zur Untersuchung der Filamentqualität

Tabelle 2 zeigt, dass sich mit den erfindungsgemäßen Formmassen 1 bis 4, bedingt durch den kombinierten Einsatz von den Gleit- und Entformungsmitteln B1 und B2, sehr hohe Maßhaltigkeiten der Filamente erhalten lassen (DM = 1,78 mm +/- 0,025 mm, Ovalität < 0,02 mm mit fast allen Mischungen). Bezüglich der Durchmesserabweichung ist für die erfindungsgemäßen Formmassen ein synergistischer Effekt erkennbar, bedingt durch den kombinierten Einsatz der Gleit- und Entformungsmittel B1 und B2, im Vergleich zu den Formmassen V5 (nur Komponente B1) und V6 (nur Komponente B2).

Die besten Ergebnisse in Bezug auf die Dimensionskonstanz (maximale Durchmesserabweichung <= +/- 0,021 mm, maximale Ovalität <= 0,013 mm) werden mit den Formmassen 3 und 4, die 30 Gew.-% des ABS-Pfropfcopolymers (Komponente b), 2 Gew.-% Ethylenbisstearylamid (B1) und 0,3 Gew.-% Magnesiumstearat (B2) enthalten, erhalten. Die höchste Dimensionskonstanz (maximale Durchmesserabweichung 0,020 mm, maximale Ovalität 0,011 mm) wird mit der Formmasse 4, enthaltend 30 Gew.-% ABS-Pfropfcopolymer (Komponente b), 70 Gew.-% der Komponente a5, 2 Gew.-% Ethylenbisstearylamid (B1) und 0,3 Gew.-% Magnesiumstearat (B2) erreicht.

### Untersuchung der Druckqualität

FDM-Versuche mit Filamenten aus den Formmassen gemäß Tabelle 1

**Tab. 3**

| | |
|---|---|
| 3D-Drucker | Umbau auf Ultimaker 1-Basis |
| Slicer | CuraEngine |
| Interface | Pronterface |
| Düsendurchmesser | 0,4 mm |
| Düsentemperatur | 240 °C |
| Druckbett | Aluminium+Polyimid (Kapton) |
| Druckbetttemperatur | Soll 135 °C, Ist 120°C |
| Bauraumtemperatur | ca. 40 °C bis 55 °C |
| Probenform | Zugstäbe nach DIN EN ISO 527 Typ 1B, um 30 mm mittig verkürzt |
| | 1 Außenkontur |
| | 1 Innenkontur |
| | Füllung: 100 %, 45°, alternierend |
| Schichtdicke | 0,254 mm |
| Druckgeschwindigkeit | 60 mm/s |
| Bauorientierung 1 Zugstäbe | Liegend |
| | Schichten parallel zur Zugrichtung, |
| | Stränge in der Füllung 45° zur Zugrichtung gemäß Figur 1 |
| Bauorientierung 2 Zugstäbe | Stehend |
| | Anordnung von 5 Zugstäben gemäß Figur 2 |
| | Schichten 90° zur Zugrichtung |

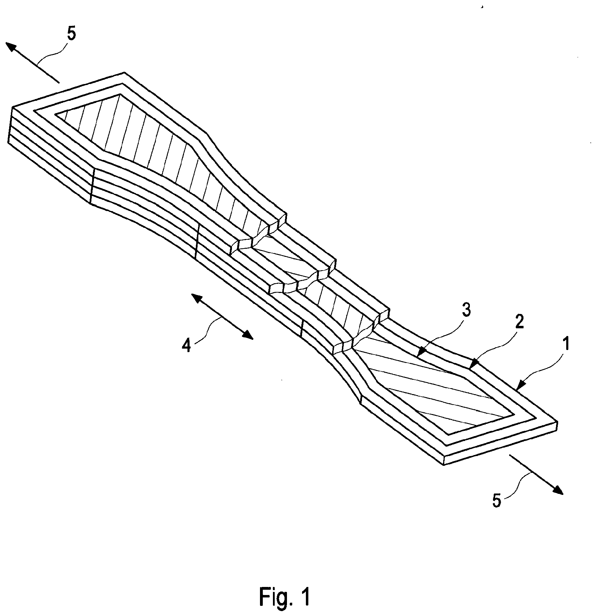

Figur 1 zeigt einen liegenden Zugstab, der Pfeil (1) zeigt die Außenkontur, der Pfeil (2) zeigt die Innenkontur, die Pfeile (3) zeigen die 45°, alternierende Füllung, der Pfeil (4) zeigt die Schichtenrichtung und die Pfeile (5) zeigen die Zugrichtung.

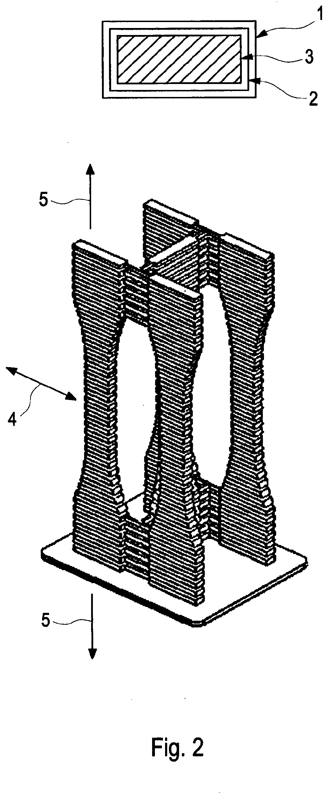

Figur 2 zeigt ein stehendes Bauteil; eine Anordnung (jeweils zwei Zugstäbe parallel zueinander, ein Zugstab um 90° versetzt und mittig dazu zentriert) von fünf miteinander über die Zugstabenden verbundenen Zugstäben. Der Pfeil (1) zeigt die Außenkontur, der Pfeil (2) zeigt die Innenkontur, der Pfeil (3) zeigt die 45°, alternierende Füllung, der Pfeil (4) zeigt die Schichtenrichtung und die Pfeile (5) zeigen die Zugrichtung.

Aus den Formmassen gemäß Tabelle 1 wurden mit Hilfe des FDM-Verfahrens stehende und liegende Zugstäbe gemäß Figur 1 und 2 hergestellt. Die Herstellungsbedingungen sind Tabelle 3 zu entnehmen. Zur Beurteilung der Druckqualität wurden die Lagen- bzw. Schichtenhaftung (Zugfestigkeit stehend gedruckter Zugstäbe), die Zugfestigkeit (von liegend gedruckten Zugstäben) und die Bruchdehnung (von liegend und stehend gedruckten Zugstäben) gemäß DIN EN ISO 527-1:2012 bestimmt (s. Tabelle 4). Die Zugversuche wurden auf einer Universalprüfmaschine vom Typ Z010 der Fa. Zwick/Roell mit einem berührenden Extensometer zur Dehnungsbestimmung, einer 10 kN-Kraftmessdose und bei einer Prüfgeschwindigkeit von 5 mm/min durchgeführt.

**Tab. 4**

| Formmasse | Schichtenhaftung (MPa) | Zugfestigkeit (MPa) | Bruchdehnung liegend/stehend gedruckter Zugstäbe (%) |
|---|---|---|---|
| 1 | 9,66 | 45,18 | 6/0,4 |
| 2 | 15,36 | 47,75 | 6,07/0,65 |
| 3 | 15,67 | 36,19 | 7,16/0,88 |
| 4 | 15,45 | 36,61 | 7,59/0,85 |
| V1 | 10,3 | 40,22 | 7,11/0,42 |
| V2 | 13,32 | 43,93 | 7,81/0,52 |
| V3 | 11,82 | 35,09 | 7,22/0,63 |
| V4 | 13,46 | 36,83 | 7,17/0,7 |
| V5 | 17,05 | 37,82 | 8,13/0,94 |
| V6 | 14,79 | 36,78 | 7,74/0,81 |

### Ergebnisse:

Die Druckqualität der aus den thermoplastischen Materialien gedruckten Zugstäbe aus den erfindungsgemäßen Formmassen ist gut. Alle gedruckten Zugstäbe aus den erfindungsgemäßen Formmassen weisen für die Anwendungen zufriedenstellende mechanische Eigenschaften aus.

## Patentansprüche

1. Thermoplastische Formmasse für den 3D-Druck enthaltend eine Mischung der Komponenten A, B1, B2 und C:
A: 92,9 bis 98,59 Gew.-% mindestens eines schlagzäh modifizierten Polymers A, bestehend aus den Komponenten a und b:
a: 40 bis 90 Gew.-% mindestens eines Vinylaromat-Copolymers a mit einer mittleren Molmasse Mw von 150.000 bis 360.000 g/mol, ausgewählt aus der Gruppe bestehend aus: Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren;
b: 10 bis 60 Gew.-% mindestens eines Pfropfcopolymers b als Schlagzähmodifikator, aus, bezogen auf b:
b1: 20 bis 90 Gew.-% einer Pfropfgrundlage b1, erhalten durch Polymerisation von:
b11: 70 bis 100 Gew.-% mindestens eines konjugierten Diens;
b12: 0 bis 30 Gew.-% mindestens eines weiteren Comonomers ausgewählt aus: Styrol, α-Methylstyrol, Acrylnitril, Methacrylnitril, MMA, MSA und N-Phenylmaleinimid (N-PMI);
b13: 0 bis 10 Gew.-% eines oder mehrerer polyfunktioneller, vernetzender Monomere;
b2: 10 bis 80 Gew.-% einer Pfropfauflage b2, erhalten durch Polymerisation von:
b21: 65 bis 95 Gew.-%, bevorzugt 70 bis 90 Gew.-% mindestens eines vinylaromatischen Monomeren, vorzugsweise Styrol und/oder α-Methylstyrol; b22: 5 bis 35 Gew.-%, bevorzugt 10 bis 30 Gew.-% Acrylnitril und/oder Methacrylnitril;
b23: 0 bis 30 Gew.-%, bevorzugt 0 bis 20 Gew.-%, mindestens eines weiteren monoethylenisch ungesättigten Monomeren ausgewählt aus: MMA, MSA und N-PMI;
wobei die Summe aus a und b 100 Gew.-% ergibt,
B1: 1,2 bis 3,5 Gew.-% mindestens eines Amids oder Amidderivats mindestens einer gesättigten höheren Fettsäure mit 14 bis 22, bevorzugt 16 bis 20, C-Atomen;
B2: 0,2 bis 0,6 Gew.-% mindestens eines Salzes einer gesättigten höheren Fettsäure mit 14 bis 22, bevorzugt 16 bis 20, C-Atomen:
C: 0,01 bis 3 Gew.-% eines oder mehrerer Hilfsmittel C ausgewählt aus der Gruppe bestehend aus: Stabilisatoren, Oxidationsverzögerern und Mitteln gegen Wärmezersetzung und Zersetzung durch ultraviolettes Licht;
wobei die Summe aus den Komponenten A, B1, B2 und C 100 Gew.-% ergibt.

2. Formmasse gemäß Anspruch 1, enthaltend zusätzlich (bezogen auf 100 Gew.-Teile der Formmasse aus den Komponenten A, B1, B2 und C) 0,01 bis 30 Gew.-Teile ein oder mehrerer üblicher, von den Komponenten B1, B2 und C verschiedener, Additive und/oder Hilfsmittel D.

3. Formmasse gemäß Anspruch 1 oder 2, **dadurch gekennzeichnet, dass** deren Viskosität (gemessen nach ISO 11443:2014) bei Scherraten von 1 bis 10 1/s und bei Temperaturen von 250 °C nicht höher als 1x10⁵ Pa*s ist und deren Melt Volume Rate (MVR, gemessen nach ISO 1133-1:2011 bei 220°C und 10 kg Last) mehr als 6 ml/10 min beträgt.

4. Formmasse gemäß einem der Ansprüche 1 bis 3, **dadurch gekennzeichnet, dass** das Vinylaromat-Copolymer a ein Styrol-Acrylnitril-Copolymer, erhalten durch Polymerisation von 18 bis 35 Gew.-% Acrylnitril (AN), und 82 bis 65 Gew.-% Styrol (S) ist.

5. Formmasse gemäß einem der Ansprüche 1 bis 4, **dadurch gekennzeichnet, dass** das Pfropfcopolymer b zusammengesetzt ist aus:
b1: 40 bis 90 Gew.-% einer Pfropfgrundlage b1, erhalten durch Polymerisation von:
b11: 70 bis 100 Gew.-%, bevorzugt 90 bis 100 Gew.-% Butadien,
b12: 0 bis 30 Gew.-%, bevorzugt 0 bis 10 Gew.-% Styrol; und
b2: 10 bis 60 Gew.-% einer Pfropfauflage b2, erhalten durch Polymerisation von:
b21: 65 bis 95 Gew.-%, bevorzugt 70 bis 90 Gew.-%, Styrol, und
b22: 5 bis 35 Gew.-%, bevorzugt 10 bis 30 Gew.-% Acrylnitril.

6. Formmasse gemäß einem der Ansprüche 1 bis 5, **dadurch gekennzeichnet, dass** in dem schlagzäh modifizierten Polymer A der Anteil der Komponente a 55 bis 85 Gew.-%, bevorzugt 65 bis 85 Gew.-%, und der Anteil des Schlagzähmodifikators b 45 bis 15 Gew.-%, bevorzugt 35 bis 15 Gew.-%, beträgt.

7. Formmasse gemäß einem der Ansprüche 1 bis 6, enthaltend:
93,5 bis 98,2 Gew.-% Komponente A,
1,5 bis 3,0 Gew.-% Komponente B1,
0,25 bis 0,5 Gew.-% Komponente B2, und
0,05 bis 3 Gew.-% Komponente C.

8. Formmasse gemäß einem der Ansprüche 1 bis 7, enthaltend:
95,1 bis 97,95 Gew.-% Komponente A,
1,7 bis 2,5 Gew.-% Komponente B1,
0,3 bis 0,4 Gew.-% Komponente B2, und
0,05 bis 2 Gew.-% Komponente C.

9. Formmasse gemäß einem der Ansprüche 1 bis 8, **dadurch gekennzeichnet, dass** B1 ein Amid oder Amidderivat der Stearin- oder Behensäure, bevorzugt Ethylenbisstearylamid, und B2 ein Calcium, Magnesium- oder Zinksalz der Stearin- oder Behensäure, bevorzugt Magnesiumstearat, ist.

10. Formmasse gemäß einem der Ansprüche 1 bis 9, **dadurch gekennzeichnet, dass** das Pfropfcopolymer b eine mittlere Teilchengröße (d₅₀) von 80 bis 1000 nm, bevorzugt 85 bis 600 nm aufweisen.

11. Formmasse gemäß einem der Ansprüche 1 bis 10, **dadurch gekennzeichnet, dass** der Schlagzähmodifikator b eine trimodale Teilchengrößenverteilung aufweist und eine Mischung von ABS-Pfropfcopolymeren b', b" und b"' ist, wobei die Pfropfgrundlage b1' des ABS-Pfropfcopolymers b' einen mittlere Teilchendurchmesser d₅₀ von 25 bis 200 nm, die Pfropfgrundlage b1" des ABS-Pfropfcopolymers b" einen mittleren Teilchendurchmesser d₅₀ von 230 bis 330 nm und die Pfropfgrundlage b1"' des ABS-Pfropfcopolymers b"' einen mittleren Teilchendurchmesser d₅₀ von 340 bis 480 nm besitzt.

12. Verwendung der thermoplastischen Formmasse gemäß einem der Ansprüche 1 bis 11 für den 3D-Druck.

13. Verwendung der thermoplastischen Formmasse gemäß einem der Ansprüche 1 bis 11 zur Herstellung von Filamenten für den 3D-Druck.

14. Verfahren zur Herstellung einer thermoplastischen Formmasse gemäß einem der Ansprüche 1 bis 11, durch Mischen der Komponenten A, B1, B2, C und gegebenenfalls Additiven und/oder Hilfsmitteln D.

## Claims

1. A thermoplastic molding composition for 3D printing, comprising a mixture of the components A, B1, B2, and C:
A: 92.9 to 98.59 wt% of at least one impact-modified polymer A, consisting of the components a and b:
a: 40 to 90 wt% of at least one vinylaromatic copolymer a having an average molar mass Mw of 150 000 to 360 000 g/mol, selected from the group consisting of: styrene-acrylonitrile copolymers, α-methylstyrene-acrylonitrile copolymers, styrene-maleic anhydride copolymers, styrene-phenylmaleimide copolymers, styrene-methyl methacrylate copolymers, styrene-acrylonitrile-maleic anhydride copolymers, styrene-acrylonitrile-phenylmaleimide copolymers, α-methylstyrene-acrylonitrile-methyl methacrylate copolymers, α-methylstyrene-acrylonitrile-tert-butyl methacrylate copolymers, and styrene-acrylonitrile-tert-butyl methacrylate copolymers;
b: 10 to 60 wt% of at least one graft copolymer b as impact modifier, consisting of, based on b:
b1: 20 to 90 wt% of a graft base b1, obtained by polymerization of:
b11: 70 to 100 wt% of at least one conjugated diene;
b12: 0 to 30 wt% of at least one further comonomer selected from: styrene, α-methylstyrene, acrylonitrile, methacrylonitrile, MMA, MAn, and N-phenylmaleimide (N-PMI);
b13: 0 to 10 wt% of one or more polyfunctional, crosslinking monomers;
b2: 10 to 80 wt% of a graft b2, obtained by polymerization of:
b21: 65 to 95 wt%, preferably 70 to 90 wt%, of at least one vinylaromatic monomer, preferably styrene and/or α-methylstyrene;
b22: 5 to 35 wt%, preferably 10 to 30 wt%, of acrylonitrile and/or methacrylonitrile;
b23: 0 to 30 wt%, preferably 0 to 20 wt%, of at least one further monoethylenically unsaturated monomer selected from: MMA, MAn, and N-PMI;
where the sum of a and b makes 100 wt%,
B1: 1.2 to 3.5 wt% of at least one amide or amide derivative of at least one saturated higher fatty acid having 14 to 22, preferably 16 to 20, carbon atoms;
B2: 0.2 to 0.6 wt% of at least one salt of a saturated higher fatty acid having 14 to 22, preferably 16 to 20, carbon atoms;
C: 0.01 to 3 wt% of one or more auxiliaries C selected from the group consisting of: stabilizers, oxidation retarders, and agents against thermal decomposition and decomposition by ultraviolet light;
where the sum of components A, B1, B2, and C makes 100 wt%.

2. The molding composition as claimed in claim 1, comprising additionally (based on 100 parts by weight of the molding composition consisting of the components A, B1, B2, and C) 0.01 to 30 parts by weight of one or more customary additives and/or auxiliaries D different from the components B1, B2, and C.

3. The molding composition as claimed in claim 1 or 2, **characterized in that** the viscosity thereof (measured to ISO 11443:2014) at shear rates of 1 to 10 1/s and at temperatures of 250°C is not higher than 1×10⁵ Pa*s and the melt volume rate thereof (MVR, measured to ISO 1133-1:2011 at 220°C and 10 kg load) is more than 6 ml/10 min.

4. The molding composition as claimed in any of claims 1 to 3, **characterized in that** the vinylaromatic copolymer a is a styrene-acrylonitrile copolymer obtained by polymerization of 18 to 35 wt% of acrylonitrile (AN) and 82 to 65 wt% of styrene (S).

5. The molding composition as claimed in any of claims 1 to 4, **characterized in that** the graft copolymer b is composed of:
b1: 40 to 90 wt% of a graft base b1, obtained by polymerization of:
b11: 70 to 100 wt%, preferably 90 to 100 wt%, of butadiene,
b12: 0 to 30 wt%, preferably 0 to 10 wt%, of styrene; and
b2: 10 to 60 wt% of a graft b2, obtained by polymerization of:
b21: 65 to 95 wt%, preferably 70 to 90 wt%, of styrene, and
b22: 5 to 35 wt%, preferably 10 to 30 wt%, of acrylonitrile.

6. The molding composition as claimed in any of claims 1 to 5, **characterized in that** in the impact-modified polymer A, the fraction of component a is 55 to 85 wt%, preferably 65 to 85 wt%, and the fraction of the impact modifier b is 45 to 15 wt%, preferably 35 to 15 wt%.

7. The molding composition as claimed in any of claims 1 to 6, comprising:
93.5 to 98.2 wt% of component A,
1.5 to 3.0 wt% of component B1,
0.25 to 0.5 wt% of component B2, and
0.05 to 3 wt% of component C.

8. The molding composition as claimed in any of claims 1 to 7, comprising:
95.1 to 97.95 wt% of component A,
1.7 to 2.5 wt% of component B1,
0.3 to 0.4 wt% of component B2, and
0.05 to 2 wt% of component C.

9. The molding composition as claimed in any of claims 1 to 8, **characterized in that** B1 is an amide or amide derivative of stearic or behenic acid, preferably ethylenebisstearylamide, and B2 is a calcium, magnesium or zinc salt of stearic or behenic acid, preferably magnesium stearate.

10. The molding composition as claimed in any of claims 1 to 9, **characterized in that** the graft copolymer b has an average particle size (d₅₀) of 80 to 1000 nm, preferably 85 to 600 nm.

11. The molding composition as claimed in any of claims 1 to 10, **characterized in that** the impact modifier b has a trimodal particle size distribution and is a mixture of ABS graft copolymers b', b", and b"', where the graft base b1' of the ABS graft copolymer b' has an average particle diameter d₅₀ of 25 to 200 nm, the graft base b1" of the ABS graft copolymer b" has an average particle diameter d₅₀ of 230 to 330 nm, and the graft base b1"' of the ABS graft copolymer b"' has an average particle diameter d₅₀ of 340 to 480 nm.

12. The use of the thermoplastic molding composition as claimed in any of claims 1 to 11 for 3D printing.

13. The use of the thermoplastic molding composition as claimed in any of claims 1 to 11 for producing filaments for 3D printing.

14. A method for producing a thermoplastic molding composition as claimed in any of claims 1 to 11, by mixing the components A, B1, B2, C, and optionally additives and/or auxiliaries D.

## Revendications

1. Composition thermoplastique pour moulage, destinée à l'impression 3D, comprenant un mélange des composants A, B1, B2 et C:
A : 92,9 à 98,59 % en poids d'au moins un polymère A modifié pour résister aux chocs constitué des composants a et b:
a: 40 à 90 % en poids d'au moins un copolymère vinylaromatique a comportant un poids moléculaire moyen Mw de 150 000 à 360 000 g/mol, choisi dans le groupe comprenant: les copolymères styrène-acrylonitrile, les copolymères α-méthylstyrène-acrylonitrile, les copolymères styrène-anhydride d'acide maléique, les copolymères styrène-phénylmaléimide, les copolymères styrène-méthylméthacrylate, les copolymères styrène-acrylonitrile-anhydride d'acide maléique, les copolymères styrène- nitrile acrylique-phénylmaléinimide, les copolymères α-méthylstyrène-acrylonitrile-méthacrylate de méthyle, les copolymères α-méthylstyrène-acrylonitrile-t-butylméthacrylate et les copolymères styrène- acrylonitrile- t-butylméthacrylate;
b: 10 à 60 % en poids d'au moins un copolymère greffé b en tant que modificateur résistant aux chocs, formé, exprimés par rapport à b, de:
b1: 20 à 90 % en poids d'une base greffée b1, obtenue par polymérisation: de
b11: 70 à 100 % en poids d'au moins un diène conjugué;
b12: 0 à 30 % en poids d'au moins un autre comonomère choisi parmi: le styrène, l'α-méthylstyrène, l'acrylonitrile, le méthacrylonitrile, MMA, MSA et le N-phénylmaléinimide (N- PMI);
b13: 0 à 10% en poids d'un ou plusieurs monomères de réticulation polyfonctionnels;
b2: 10 à 80% en poids d'une couche greffée b2 obtenu par polymérisation de:
b21: 65 à 95% en poids, de préférence 70 à 90% en poids, d'au moins un monomère vinylaromatique, de préférence de styrène et/ou d'α-méthylstyrène;
b22: 5 à 35 % en poids, de préférence 10 à 30 % en poids, d'acrylonitrile et/ou de méthacrylonitrile;
b23: 0 à 30 % en poids, de préférence 0 à 20 % en poids, d'au moins un autre monomère monoéthylénique insaturé choisi parmi: MMA, MSA et N-PMI;
dans laquelle la somme de a et b est de 100 % en poids,
B1: 1,2 à 3,5 % en poids d'au moins un amide ou dérivé d'amide d'au moins un acide gras supérieur saturé comportant 14 à 22, de préférence 16 à 20, atomes de carbone;
B2: 0,2 à 0,6 % en poids d'au moins d'au moins un sel d'un acide gras supérieur saturé comportant 14 à 22, de préférence 16 à 20, atomes de carbone;
C: 0,01 à 3% en poids d'un ou plusieurs adjuvants C choisis dans le groupe constitué par: les stabilisants, les retardateurs d'oxydation et les agents agissant contre la décomposition thermique et la décomposition par la lumière ultraviolette;
la somme des composants A, B1, B2 et C étant de 100% en poids.

2. Composition pour moulage selon la revendication 1, contenant en outre (exprimés sur la base de 100 % de parties en poids de la composition pour moulage comprenant les composants A, B1, B2 et C) de 0,01 à 30 parties en poids d'un ou plusieurs additifs et/ou adjuvants D usuels autres que les composants B1, B2 et C.

3. Composition pour moulage selon la revendication 1 ou 2, **caractérisée en ce que** sa viscosité (mesurée selon ISO 11443:2014) à des vitesses de cisaillement de 1 à 10 1/s et à des températures de 250°C n'est pas supérieure à 1x105 Pa*s et son indice de fluidité à chaud en volume (MVR, mesuré selon ISO 1133-1:2011 à 220°C et 10 kg charge) est supérieur à 6 ml/10 mn.

4. Composition pour moulage selon l'une des revendications 1 à 3, **caractérisée en ce que** le copolymère vinylaromatique a est un copolymère styrène-acrylonitrile obtenu par polymérisation de 18 à 35% en poids d'acrylonitrile (AN) et 82 à 65% en poids de styrène (S).

5. Composition pour moulage selon l'une des revendications 1 à 4, **caractérisée en ce que** le copolymère greffé b est composé de:
b1: 40 à 90% en poids d'une base greffée b1 obtenue par polymérisation de:
b11: 70 à 100% en poids, de préférence 90 à 100% en poids, de butadiène
b12: b12: 0 à 30 % en poids, de préférence 0 à 10 % en poids de styrène; et
b2: 10 à 60 % en poids d'une couche greffée b2 obtenue par polymérisation de:
b21: 65 à 95 % en poids, de préférence 70 à 90 % en poids de styrène et
b22: 5 à 35 % en poids, de préférence 10 à 30 % en poids d'acrylonitrile.

6. Une composition pour moulage selon l'une des revendications 1 à 5, **caractérisée en ce que** dans le polymère modifié résistant aux chocs A, la proportion du composant a représente 55 à 85 % en poids, de préférence 65 à 85 % en poids et la proportion du polymère modifié résistant aux chocs b est de 45 à 15 % en poids, de préférence 35 à 15 % en poids.

7. Une composition pour moulage selon l'une des revendications 1 à 6, contenant:
- 93,5 à 98,2 % en poids du composant A,
- 1,5 à 3,0 % en poids du composant B1,
- 0,25 à 0,5 % en poids du composant B2 et
- 0,05 à 3 % en poids du composant C.

8. Une composition pour moulage selon 1 à une des revendications 1 à 7, contenant:
- 95,1 à 97,95 % en poids du composant A,
- 1,7 à 2,5 % en poids du composant B1,
- 0,3 à 0,4 % en poids du composant B2, et
- 0,05 à 2 % en poids du composant C.

9. Une composition pour moulage selon1 l'une des revendications 1 à 8,
**caractérisé en ce que**
B1 est un amide ou un dérivé amide de l'acide stéarique ou de l'acide béhénique, de préférence de l'éthylène-bisstéarylamide, et
B2 est un sel de calcium, de magnésium ou de zinc de l'acide stéarique ou de l'acide béhénique, de préférence de stéarate de magnésium.

10. Une composition pour moulage selon la revendication 1 à 9, **caractérisée en ce que** le copolymère greffé b présente une granulométrie moyenne (d₅₀) de 80 à 1000 nm, de préférence de 85 à 600 nm.

11. Composition pour moulage selon l'une des revendications 1 à 10, **caractérisée en ce que** l'agent modifiant la résistance aux chocs b présente une distribution granulométrique trimodale et est un mélange de copolymères greffés ABS b', b" et b"', la base de greffage b1' du copolymère greffé ABS b' présentant un diamètre moyen des particules d₅₀ de 25 à 200 nm, la base de greffe b1" du copolymère greffé ABS b" présentant un diamètre de particule moyen d₅₀ de 230 à 330 nm et la base de greffe b1"' du copolymère greffé ABS b"' présentant un diamètre de particule moyen d₅₀ de 340 à 480 nm.

12. Utilisation de la composition pour moulage thermoplastique selon l'une quelconque des revendications 1 à 11 pour l'impression 3D.

13. Utilisation de la composition thermoplastique pour moulage selon l'une quelconque des revendications 1 à 11 pour la production de filaments pour l'impression 3D.

14. Procédé de préparation d'une composition pour moulage thermoplastique selon l'une des revendications 1 à 11 par mélange des composants A, B1, B2, C et éventuellement des additifs et/ou adjuvants D.
